(19) **Europäisches Patentamt / European Patent Office / Office européen des brevets**

(11) **EP 4 301 029 A1**

(12) # EUROPEAN PATENT APPLICATION
published in accordance with Art. 153(4) EPC

(43) Date of publication:
**03.01.2024 Bulletin 2024/01**

(21) Application number: **22778807.2**

(22) Date of filing: **25.03.2022**

(51) International Patent Classification (IPC):
**H04W 24/08** *(2009.01)* **H04W 64/00** *(2009.01)*

(52) Cooperative Patent Classification (CPC):
**H04W 24/08; H04W 64/00**

(86) International application number:
**PCT/CN2022/083189**

(87) International publication number:
**WO 2022/206625 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.04.2021 CN 202110365571
24.08.2021 CN 202110975593**

(71) Applicant: **Huawei Technologies Co., Ltd.
Shenzhen, Guangdong 518129 (CN)**

(72) Inventors:
• **YU, Yingjie
Shenzhen, Guangdong 518129 (CN)**
• **HUANG, Su
Shenzhen, Guangdong 518129 (CN)**

(74) Representative: **Huawei European IPR
Huawei Technologies Duesseldorf GmbH
Riesstraße 25
80992 München (DE)**

(54) **POSITIONING INFORMATION REPORTING METHOD AND APPARATUS**

(57) Embodiments of this application provide a positioning information reporting method and an apparatus, and relate to the field of communication technologies, to reduce a measurement error in a positioning technology and improve positioning precision. The method includes: A terminal device obtains request location information that is of a location management network element and that includes angle assistance information. The angle assistance information may indicate an angle between an access network element and the terminal device. The terminal device sends, to the location management network element, provide location information including a measurement result and first indication information corresponding to the measurement result. The measurement result may be a result of measuring, by the terminal device based on the angle assistance information, a signal sent by the access network element. The first indication information may indicate whether an angle corresponding to the measurement result is within the angle indicated by the angle assistance information.

FIG. 4

**EP 4 301 029 A1**

# EP 4 301 029 A1

## Description

This application claims priority to Chinese Patent Application No. 202110365571.5, filed with the China National Intellectual Property Administration on April 2, 2021 and entitled "POSITIONING INFORMATION REPORTING METHOD AND APPARATUS", and priority to Chinese Patent Application No. 202110975593.3, filed with the China National Intellectual Property Administration on August 24, 2021 and entitled "POSITIONING INFORMATION REPORTING METHOD AND APPARATUS", which are incorporated herein by reference in their entireties.

## TECHNICAL FIELD

This application relates to the field of communication technologies, and in particular, to a positioning information reporting method and an apparatus.

## BACKGROUND

With the rapid development of communication technologies, a communication system has an increasingly high requirement on precision of a positioning technology. For example, the positioning technology may include an uplink positioning technology, a downlink positioning technology, and an uplink/downlink positioning technology.

A location management network element may determine location information of a terminal device by measuring a latency by using a positioning technology, for example, a downlink time difference of arrival (downlink time difference of arrival, DL-TDOA) technology, or a multi-round-trip time (multi-round-trip time, Multi-RTT) technology, based on signal latencies that are between the terminal device and a plurality of access network elements and that are reported by the terminal device; or may determine location information of a terminal device by measuring an angle by using a positioning technology, for example, a downlink time angle of departure (downlink time angle of departure, DL-AOD) technology, based on measurement values that are of reference signal received power (reference signal received power, RSRP) between the terminal device and a plurality of access network elements and that are reported by the terminal device, and a transmit beam pattern of each access network element.

Because a signal may be transmitted in a straight line between the terminal device and the access network element by using a line of sight (line of sight, LOS) path, or may be transmitted through reflection or diffraction by using a non-line of sight (non-line of sight, NLOS) path, when the terminal device measures, by using the foregoing positioning technology, a signal sent by the access network element, if the terminal device measures a signal transmitted by using the NLOS path, a latency error or an RSRP error of the signal obtained by the terminal device through measurement is large. As a result, an error of the location information of the terminal device determined by the location management network element is large, and positioning precision is affected.

## SUMMARY

This application provides a positioning information reporting method and an apparatus, to reduce a measurement error in a positioning technology and improve positioning precision.

According to a first aspect, this application provides a positioning information reporting method. The method includes: A terminal device obtains request location information that is of a location management network element and that includes angle assistance information. The angle assistance information indicates an angle between an access network element and the terminal device. The terminal device sends, to the location management network element, provide location information including a measurement result and first indication information corresponding to the measurement result. The measurement result is a result of measuring, by the terminal device based on the angle assistance information, a signal sent by the access network element. The first indication information indicates whether an angle corresponding to the measurement result is within the angle indicated by the angle assistance information.

According to the first aspect, the terminal device may measure or preferably measure, in the angle indicated by the angle assistance information, the signal sent by the access network element, to narrow down an angle search range, reduce a measurement error of measuring, by the terminal device, the signal sent by the access network element, reduce processing complexity of the terminal device, improve computing efficiency, and save computing time. In addition, when reporting the measurement result to the location management network element, the terminal device may further carry the first indication information indicating whether an angle or a direction of arrival corresponding to the measurement result is within the angle indicated by the angle assistance information, so that the location management network element determines, based on the first indication information, whether the measurement result corresponds to a LOS path or an NLOS path, and further determines location information of the terminal device based on the measurement result corresponding to the LOS path, to reduce an error of the location information that is of the terminal device and that is determined by the location management network element based on the measurement result of the terminal device, and improve

2

positioning precision.

In a possible design, the first indication information is carried in the measurement result.

In a possible design, the terminal device sends, to the location management network element, the provide location information including the measurement result, and sends, to the location management network element, the first indication information corresponding to the measurement result.

Based on the foregoing two possible designs, the terminal device may carry, in the provide location information, the measurement result and the first indication information corresponding to the measurement result, and send the provide location information to the location management network element; or may carry the first indication information in the measurement result and send the measurement result to the location management network element by using the provide location information; or may carry the measurement result in the provide location information and send the provide location information to the location management network element, and send, to the location management network element by using other signaling, the first indication information corresponding to the measurement result. This is not limited. This provides a plurality of feasible solutions for the terminal device to send, to the location management network element, the measurement result and the first indication information corresponding to the measurement result.

In a possible design, the terminal device sends, to the location management network element, the provide location information including the measurement result. The measurement result is a result of measuring, by the terminal device based on the angle assistance information, the signal sent by the access network element, and the angle corresponding to the measurement result is within the angle indicated by the angle assistance information.

Based on this possible design, compared with that the terminal device sends, to the location management network element, the measurement result and the first indication information corresponding to the measurement result, the terminal device may alternatively select a measurement result when sending the measurement result to the location management network element. That is, the terminal device sends, to the location management network element, a measurement result whose corresponding angle is within the angle indicated by the angle assistance information, so that the location management network element can directly determine the location information of the terminal device based on the received measurement result, to improve positioning precision and reduce signaling overheads.

In a possible design, the angle assistance information includes azimuth angle information and/or zenith angle information, the azimuth angle information indicates an included angle that is on a horizontal plane and between the access network element and the terminal device, and the zenith angle information indicates an included angle between a zenith direction and a direction of the access network element relative to the terminal device.

Based on this possible design, when the terminal device and the access network element are not at a same height, the location management network element may decompose the angle between the access network element and the terminal device into two planes, for example, a horizontal plane and a vertical plane. In other words, the angle assistance information includes the azimuth angle information and the zenith angle information. The location management network element may alternatively decompose the angle between the access network element and the terminal device into another plane. This is not limited.

In a possible design, the azimuth angle information includes one or more of the following information: an azimuth angle value, an azimuth angle range, a first value, preset azimuth angle value information, and preset azimuth angle range information. The azimuth angle range is obtained by adding or subtracting the azimuth angle value and the first value, the preset azimuth angle value information indicates the azimuth angle value, and the preset azimuth angle range information indicates the azimuth angle range.

Based on this possible design, the location management network element may indicate the azimuth angle value to the terminal device by sending the azimuth angle value or sending the preset azimuth angle value information, so that the terminal device performs signal measurement in a direction indicated by the azimuth angle value; or may indicate the azimuth angle range to the terminal device by sending the azimuth angle range, or sending the azimuth angle value and the first value, or sending the preset azimuth angle range information, so that the terminal device performs signal measurement in the azimuth angle range. This narrows down an angle search range of the terminal device, reduces processing complexity of the terminal device, improves computing efficiency, and saves computing time.

In a possible design, the azimuth angle information includes the azimuth angle value and the first value, and the first value is 0.

Based on this possible design, when the location management network element sends the first value whose value is 0 to the terminal device, the terminal device may perform signal measurement in the direction indicated by the received azimuth angle value, to narrow down the angle search range of the terminal device, reduce the processing complexity of the terminal device, improve the computing efficiency, and save the computing time.

In a possible design, the zenith angle information includes one or more of the following information: a zenith angle value, a zenith angle range, a second value, preset zenith angle value information, and preset zenith angle range information. The zenith angle range is obtained by adding or subtracting the zenith angle value and the second value, the preset zenith angle value information indicates the zenith angle value, and the preset zenith angle range information indicates the zenith angle range.

Based on this possible design, the location management network element may indicate the zenith angle value to the terminal device by sending the zenith angle value or sending the preset zenith angle value information, so that the terminal device performs signal measurement in a direction indicated by the zenith angle value; or may indicate the zenith angle range to the terminal device by sending the zenith angle range, or sending the zenith angle value and the first value, or sending the preset zenith angle range information, so that the terminal device performs signal measurement in the zenith angle range. This narrows down an angle search range of the terminal device, reduces processing complexity of the terminal device, improves computing efficiency, and saves computing time.

In a possible design, the zenith angle information includes the zenith angle value and the second value, and the second value is 0.

Based on this possible design, when the location management network element sends the second value whose value is 0 to the terminal device, the terminal device may perform signal measurement in the direction indicated by the received zenith angle value, to narrow down the angle search range of the terminal device, reduce the processing complexity of the terminal device, improve the computing efficiency, and save the computing time.

In a possible design, the request location information further includes one or more of the following information: identification information of the access network element, first path type information, path quantity information, granularity information, and a reporting type. The first path type information indicates a type of a path corresponding to the signal that is of the access network element and that is measured by the terminal device; when the path quantity information indicates that a path quantity is N, the measurement result of measuring the signal of the access network element by the terminal device corresponds to N paths, where $N \geq 1$; the granularity information indicates a granularity of the measurement result; and the reporting type is periodic reporting or aperiodic reporting.

In a possible design, when the reporting type is periodic reporting, the request location information may further include a reporting periodicity and/or a quantity of reporting times.

Based on the foregoing two possible designs, the request location information may further include one or more of the foregoing information, so that the terminal device performs signal measurement based on the request location information and reports the measurement result.

In a possible design, a type of a path includes one or more of the following: a first path, a strongest path, and a reflection path.

Based on this possible design, the terminal device may measure, based on a type of a path indicated by the location management network element, the signal sent by the access network element.

In a possible design, the request location information is long term evolution positioning protocol LPP request location information, and the provide location information is LPP provide location information.

In a possible design, the measurement result includes one or more of the following: an angle of arrival, a reference signal time difference RSTD, reference signal received power RSRP, and round trip time RTT. The angle of arrival is an angle at which the signal sent by the access network element reaches the terminal device.

For example, the RSTD may be a difference between a first moment and a second moment. The first moment may be a moment at which the signal sent by the access network element reaches the terminal device, and the second moment may be a moment at which a signal sent by a reference access network element reaches the terminal device. The RSRP may be beam-level RSRP. The RTT may be round trip time between the access network element and the terminal device.

Based on this possible design, the measurement result may include one or more of the foregoing, to provide a feasible solution for the terminal device to perform signal measurement and obtain the measurement result.

In a possible design, the angle of arrival includes a first azimuth angle value and a first zenith angle value, the first azimuth angle value is an included angle that is measured by the terminal device and that is on the horizontal plane and between the access network element and the terminal device, and the first zenith angle value is an included angle that is measured by the terminal device and that is between the zenith direction and the direction of the access network element relative to the terminal device.

Based on this possible design, when the terminal device and the access network element are not at a same height, the terminal device may report the angle of arrival to the location management network element by reporting the first azimuth angle value and the first zenith angle value, to improve reporting precision.

In a possible design, the provide location information further includes one or more of the following information: second indication information, and second path type information. The second indication information indicates an angular coordinate system corresponding to the measurement result, and the second path type information indicates a type of a path corresponding to the measurement result.

Based on this possible design, the terminal device may further report the second indication information, so that the location management network element determines the location information of the terminal device based on the measurement result and the angular coordinate system corresponding to the measurement result, to improve positioning precision. The terminal device may further report the second path type information, so that the location management network element determines, based on the second path type information, the type of the path corresponding to the measurement result.

In a possible design, the terminal device performs, based on the request location information, beamforming at the angle indicated by the angle assistance information.

Based on this possible design, the terminal device may further perform, based on the request location information, beamforming at the angle indicated by the angle assistance information, to enhance energy of a path in a direction of the angle indicated by the angle assistance information, weaken energy of another reflection path, and improve accuracy of an angle, a latency, or RSRP of a signal obtained by the terminal device through measurement, so as to improve accuracy of the location information of the terminal device determined by the location management network element, and improve positioning precision. Beamforming may also be described as spatial filtering.

In a possible design, the terminal device obtains the request location information of the location management network element. The request location information includes X pieces of angle assistance information corresponding to X access network elements. An $i^{th}$ piece of angle assistance information indicates an angle between an $i^{th}$ access network element and the terminal device. X is greater than or equal to 1, and $1 \leq i \leq X$. The terminal device sends the provide location information to the location management network element. The provide location information includes X measurement results corresponding to the X access network elements and X pieces of first indication information corresponding to the X measurement results. An $i^{th}$ measurement result is a result of measuring, by the terminal device based on the $i^{th}$ piece of angle assistance information, a signal sent by the $i^{th}$ access network element. An $i^{th}$ piece of first indication information indicates whether an angle corresponding to the $i^{th}$ measurement result is within the angle indicated by the $i^{th}$ piece of angle assistance information.

Based on this possible design, when the request location information includes angle assistance information corresponding to a plurality of access network elements, the terminal device may determine, based on the X pieces of angle assistance information, the X measurement results corresponding to the X access network elements and the X pieces of first indication information, and send the X measurement results and the X pieces of first indication information to the location management network element, so that the location management network element determines the location information of the terminal device based on the X measurement results, to improve positioning precision.

In a possible design, the $i^{th}$ piece of first indication information is carried in the $i^{th}$ measurement result.

In a possible design, the terminal device sends, to the location management network element, the provide location information including the X measurement results, and sends, to the location management network element, the X pieces of first indication information corresponding to the X measurement results.

Based on the foregoing three possible designs, the terminal device may carry, in the provide location information, the X measurement results and the X pieces of first indication information corresponding to the X measurement results, and send the provide location information to the location management network element; or may carry the $i^{th}$ piece of first indication information in the $i^{th}$ measurement result and send the $i^{th}$ measurement result to the location management network element by using the provide location information; or may carry the X measurement results in the provide location information and send the provide location information to the location management network element, and send, to the location management network element by using other signaling, the X pieces of first indication information corresponding to the X measurement results. This is not limited. This provides a plurality of feasible solutions for the terminal device to send, to the location management network element, the measurement result and the first indication information corresponding to the measurement result.

In a possible design, the terminal device sends, to the location management network element, provide location information including Y measurement results. A $j^{th}$ measurement result is a result of measuring, by the terminal device based on a $j^{th}$ piece of angle assistance information, a signal sent by a $j^{th}$ access network element, and an angle corresponding to the $j^{th}$ measurement result is within an angle indicated by the $j^{th}$ piece of angle assistance information. $Y \leq X$; and $1 \leq j \leq Y$.

Based on this possible design, compared with that the terminal device sends, to the location management network element, the X measurement results and the X pieces of first indication information corresponding to the X measurement results, the terminal device may alternatively select a measurement result when sending the measurement result to the location management network element. That is, the terminal device sends, to the location management network element, the Y measurement results whose corresponding angles are within the angle indicated by the angle assistance information, so that the location management network element can directly determine the location information of the terminal device based on the received Y measurement results, to improve positioning precision and reduce signaling overheads.

In a possible design, the request location information further includes one or more of the following information: identification information of the X access network elements, X pieces of first path type information, X pieces of path quantity information, granularity information, and a reporting type. An $i^{th}$ piece of first path type information indicates a type of a path corresponding to the signal that is of the $i^{th}$ access network element and that is measured by the terminal device. When an $i^{th}$ piece of path quantity information indicates that a path quantity is N, a measurement result of measuring the signal of the $i^{th}$ access network element by the terminal device corresponds to N paths. $N \geq 1$.

In a possible design, the provide location information further includes one or more of the following information: second indication information, and X pieces of second path type information. The second indication information indicates an angular coordinate system corresponding to the X measurement results, and an $i^{th}$ piece of second path type information indicates a type of a path corresponding to the $i^{th}$ measurement result.

In a possible design, the terminal device performs, based on the request location information, beamforming at the angle indicated by the X pieces of angle assistance information.

It should be noted that for descriptions of each of the X pieces of angle assistance information, each of the X measurement results, and each of the X pieces of first indication information, refer to the specific descriptions of the angle assistance information, the measurement result, and the first indication information. Details are not described.

According to a second aspect, this application provides a terminal device. The terminal device may implement functions performed by the terminal device in the first aspect or the possible designs of the first aspect, and the functions may be implemented by hardware by executing corresponding software. The hardware or the software includes one or more modules corresponding to the functions, for example, a transceiver module. The transceiver module is configured to obtain request location information that is of a location management network element and that includes angle assistance information. The angle assistance information indicates an angle between an access network element and a terminal device. The transceiver module is further configured to send, to the location management network element, provide location information including a measurement result and first indication information corresponding to the measurement result. The measurement result is a result of measuring, by the terminal device based on the angle assistance information, a signal sent by the access network element. The first indication information indicates whether an angle corresponding to the measurement result is within the angle indicated by the angle assistance information.

In a possible design, the first indication information is carried in the measurement result.

In a possible design, the transceiver module is further configured to send, to the location management network element, the provide location information including the measurement result; and is further configured to send, to the location management network element, the first indication information corresponding to the measurement result.

In a possible design, the transceiver module is further configured to send, to the location management network element, the provide location information including the measurement result. The measurement result is a result of measuring, by the terminal device based on the angle assistance information, the signal sent by the access network element, and the angle corresponding to the measurement result is within the angle indicated by the angle assistance information.

In a possible design, the angle assistance information includes azimuth angle information and/or zenith angle information, the azimuth angle information indicates an included angle that is on a horizontal plane and between the access network element and the terminal device, and the zenith angle information indicates an included angle between a zenith direction and a direction of the access network element relative to the terminal device.

In a possible design, the azimuth angle information includes one or more of the following information: an azimuth angle value, an azimuth angle range, a first value, preset azimuth angle value information, and preset azimuth angle range information. The azimuth angle range is obtained by adding or subtracting the azimuth angle value and the first value, the preset azimuth angle value information indicates the azimuth angle value, and the preset azimuth angle range information indicates the azimuth angle range.

In a possible design, the azimuth angle information includes the azimuth angle value and the first value, and the first value is 0.

In a possible design, the zenith angle information includes one or more of the following information: a zenith angle value, a zenith angle range, a second value, preset zenith angle value information, and preset zenith angle range information. The zenith angle range is obtained by adding or subtracting the zenith angle value and the second value, the preset zenith angle value information indicates the zenith angle value, and the preset zenith angle range information indicates the zenith angle range.

In a possible design, the zenith angle information includes the zenith angle value and the second value, and the second value is 0.

In a possible design, the request location information further includes one or more of the following information: identification information of the access network element, first path type information, path quantity information, granularity information, and a reporting type. The first path type information indicates a type of a path corresponding to the signal that is of the access network element and that is measured by the terminal device; when the path quantity information indicates that a path quantity is N, the measurement result of measuring the signal of the access network element by the terminal device corresponds to N paths, where $N \geq 1$; the granularity information indicates a granularity of the measurement result; and the reporting type is periodic reporting or aperiodic reporting.

In a possible design, when the reporting type is periodic reporting, the request location information further includes a reporting periodicity and/or a quantity of reporting times.

In a possible design, a type of a path includes one or more of the following: a first path, a strongest path, and a reflection path.

In a possible design, the request location information is long term evolution positioning protocol LPP request location information, and the provide location information is LPP provide location information.

In a possible design, the measurement result includes one or more of the following: an angle of arrival, a reference signal time difference RSTD, reference signal received power RSRP, and round trip time RTT. The angle of arrival is an angle at which the signal sent by the access network element reaches the terminal device.

For example, the RSTD may be a difference between a first moment and a second moment. The first moment may be a moment at which the signal sent by the access network element reaches the terminal device, and the second moment may be a moment at which a signal sent by a reference access network element reaches the terminal device. The RSRP may be beam-level RSRP. The RTT may be round trip time between the access network element and the terminal device.

In a possible design, the angle of arrival includes a first azimuth angle value and a first zenith angle value, the first azimuth angle value is an included angle that is measured by the terminal device and that is on the horizontal plane and between the access network element and the terminal device, and the first zenith angle value is an included angle that is measured by the terminal device and that is between the zenith direction and the direction of the access network element relative to the terminal device.

In a possible design, the provide location information further includes one or more of the following information: second indication information, and second path type information. The second indication information indicates an angular coordinate system corresponding to the measurement result, and the second path type information indicates a type of a path corresponding to the measurement result.

In a possible design, the terminal device further includes a processing module. The processing module is configured to perform, based on the request location information, beamforming at the angle indicated by the angle assistance information.

In a possible design, the transceiver module is further configured to obtain the request location information of the location management network element. The request location information includes X pieces of angle assistance information corresponding to X access network elements. An $i^{th}$ piece of angle assistance information indicates an angle between an $i^{th}$ access network element and the terminal device. X is greater than or equal to 1, and $1 \leq i \leq X$. The transceiver module is further configured to send the provide location information to the location management network element. The provide location information includes X measurement results corresponding to the X access network elements and X pieces of first indication information corresponding to the X measurement results. An $i^{th}$ measurement result is a result of measuring, by the terminal device based on the $i^{th}$ piece of angle assistance information, a signal sent by the $i^{th}$ access network element. An $i^{th}$ piece of first indication information indicates whether an angle corresponding to the $i^{th}$ measurement result is within the angle indicated by the $i^{th}$ piece of angle assistance information.

In a possible design, the $i^{th}$ piece of first indication information is carried in the $i^{th}$ measurement result.

In a possible design, the transceiver module is further configured to send, to the location management network element, the provide location information including the X measurement results; and is further configured to send, to the location management network element, the X pieces of first indication information corresponding to the X measurement results.

In a possible design, the transceiver module is further configured to send, to the location management network element, provide location information including Y measurement results. A $j^{th}$ measurement result is a result of measuring, by the terminal device based on a $j^{th}$ piece of angle assistance information, a signal sent by a $j^{th}$ access network element, and an angle corresponding to the $j^{th}$ measurement result is within an angle indicated by the $j^{th}$ piece of angle assistance information. $Y \leq X$; and $1 \leq j \leq Y$

In a possible design, the request location information further includes one or more of the following information: identification information of the X access network elements, X pieces of first path type information, X pieces of path quantity information, granularity information, and a reporting type. An $i^{th}$ piece of first path type information indicates a type of a path corresponding to the signal that is of the $i^{th}$ access network element and that is measured by the terminal device. When an $i^{th}$ piece of path quantity information indicates that a path quantity is N, a measurement result of measuring the signal of the $i^{th}$ access network element by the terminal device corresponds to N paths. $N \geq 1$.

In a possible design, the provide location information further includes one or more of the following information: second indication information, and X pieces of second path type information. The second indication information indicates an angular coordinate system corresponding to the X measurement results, and an $i^{th}$ piece of second path type information indicates a type of a path corresponding to the $i^{th}$ measurement result.

In a possible design, the processing module is further configured to perform, based on the request location information, beamforming at the angle indicated by the X pieces of angle assistance information.

For descriptions of each of the X pieces of angle assistance information, each of the X measurement results, and each of the X pieces of first indication information, refer to the specific descriptions of the angle assistance information, the measurement result, and the first indication information. Details are not described.

It should be noted that the transceiver module may further include a receiving module and a sending module.

The receiving module may be configured to perform a receiving operation performed by the transceiver module. The sending module may be configured to perform a sending operation performed by the transceiver module.

It should be noted that for a specific implementation of the terminal device, refer to a behavior function of the terminal device in the positioning information reporting method provided in any one of the first aspect or the possible designs of the first aspect. For technical effects brought by the terminal device, refer to technical effects brought by any possible design of the first aspect. Details are not described again.

According to a third aspect, this application provides a terminal device. The terminal device may be a terminal device or a chip or a system-on-a-chip in the terminal device. The terminal device may implement functions performed by the terminal device in the foregoing aspects or the possible designs, and the functions may be implemented by hardware. In a possible design, the terminal device may include a transceiver. The transceiver may be configured to support the terminal device in implementing the functions in any one of the first aspect or the possible designs of the first aspect. For example, the transceiver may be configured to obtain request location information that is of a location management network element and that includes angle assistance information. The angle assistance information indicates an angle between an access network element and the terminal device. The transceiver may be further configured to send, to the location management network element, provide location information including a measurement result and first indication information corresponding to the measurement result. The measurement result is a result of measuring, by the terminal device based on the angle assistance information, a signal sent by the access network element. The first indication information indicates whether an angle corresponding to the measurement result is within the angle indicated by the angle assistance information. In another possible design, the terminal device may further include a processor and a memory. The memory is configured to store computer-executable instructions and data that are necessary for the terminal device. When the terminal device runs, the transceiver and the processor execute the computer-executable instructions stored in the memory, so that the terminal device performs the positioning information reporting method according to any one of the first aspect or the possible designs of the first aspect.

In a possible design, the transceiver may further include a receiver and a transmitter. The receiver may be configured to perform a receiving operation performed by the transceiver. The transmitter may be configured to perform a sending operation performed by the transceiver.

It should be noted that the transceiver may alternatively be described as an input/output unit. The input/output unit may alternatively include an input unit and an output unit. The input unit may be configured to perform the receiving operation performed by the transceiver, and the output unit may be configured to perform the sending operation performed by the transceiver.

For a specific implementation of the terminal device in the third aspect, refer to a behavior function of the terminal device in the positioning information reporting method provided in any one of the first aspect or the possible designs of the first aspect.

According to a fourth aspect, this application provides a positioning information reporting method. The method may include: A location management network element sends request location information to a terminal device. The request location information includes angle assistance information, and the angle assistance information indicates an angle between an access network element and the terminal device. The location management network element obtains provide location information of the terminal device. The provide location information includes a measurement result and first indication information corresponding to the measurement result. The measurement result is a result of measuring, by the terminal device based on the angle assistance information, a signal sent by the access network element. The first indication information indicates whether an angle corresponding to the measurement result is within the angle indicated by the angle assistance information. The location management network element determines location information of the terminal device based on the provide location information.

According to the fourth aspect, the location management network element sends the angle assistance information to the terminal device, so that the terminal device can measure or preferably measure, in the angle indicated by the angle assistance information, the signal sent by the access network element, to narrow down an angle search range, reduce a measurement error of measuring, by the terminal device, the signal sent by the access network element, reduce processing complexity of the terminal device, improve computing efficiency, and save computing time. In addition, when reporting the measurement result to the location management network element, the terminal device may further carry the first indication information indicating whether an angle corresponding to the measurement result is within the angle or a direction of arrival indicated by the angle assistance information, so that the location management network element determines, based on the first indication information, whether the measurement result corresponds to a LOS path or an NLOS path, and further determines the location information of the terminal device based on the measurement result corresponding to the LOS path, to reduce an error of the location information that is of the terminal device and that is determined by the location management network element based on the measurement result of the terminal device, and improve positioning precision.

In a possible design, the first indication information is carried in the measurement result.

In a possible design, the location management network element obtains the provide location information that is of the terminal device and that includes the measurement result, and obtains the first indication information corresponding to the measurement result.

Based on the foregoing two possible designs, the terminal device may carry, in the provide location information, the measurement result and the first indication information corresponding to the measurement result, and send the provide location information to the location management network element; or may carry the first indication information in the measurement result and send the measurement result to the location management network element by using the provide location information; or may carry the measurement result in the provide location information and send the provide location information to the location management network element, and send, to the location management network element by using other signaling, the first indication information corresponding to the measurement result. This is not limited. This provides a plurality of feasible solutions for the terminal device to send, to the location management network element, the measurement result and the first indication information corresponding to the measurement result.

In a possible design, the location management network element obtains the provide location information that is of the terminal device and that includes the measurement result. The measurement result is a result of measuring, by the terminal device based on the angle assistance information, the signal sent by the access network element, and the angle corresponding to the measurement result is within the angle indicated by the angle assistance information.

Based on this possible design, compared with that the terminal device sends, to the location management network element, the measurement result and the first indication information corresponding to the measurement result, the terminal device may alternatively select a measurement result when sending the measurement result to the location management network element. That is, the terminal device sends, to the location management network element, a measurement result whose corresponding angle is within the angle indicated by the angle assistance information, so that the location management network element can directly determine the location information of the terminal device based on the received measurement result, to improve positioning precision and reduce signaling overheads.

In a possible design, the angle assistance information includes azimuth angle information and zenith angle information, the azimuth angle information indicates an included angle that is on a horizontal plane and between the access network element and the terminal device, and the zenith angle information indicates an included angle between a zenith direction and a direction of the access network element relative to the terminal device.

Based on this possible design, when the terminal device and the access network element are not at a same height, the location management network element may decompose the angle between the access network element and the terminal device into two planes, for example, a horizontal plane and a vertical plane. In other words, the angle assistance information includes the azimuth angle information and the zenith angle information. The location management network element may alternatively decompose the angle between the access network element and the terminal device into another plane. This is not limited.

In a possible design, the azimuth angle information includes one or more of the following information: an azimuth angle value, an azimuth angle range, a first value, preset azimuth angle value information, and preset azimuth angle range information. The azimuth angle range is obtained by adding or subtracting the azimuth angle value and the first value, the preset azimuth angle value information indicates the azimuth angle value, and the preset azimuth angle range information indicates the azimuth angle range.

Based on this possible design, the location management network element may indicate the azimuth angle value to the terminal device by sending the azimuth angle value or sending the preset azimuth angle value information, so that the terminal device performs signal measurement in a direction indicated by the azimuth angle value; or may indicate the azimuth angle range to the terminal device by sending the azimuth angle range, or sending the azimuth angle value and the first value, or sending the preset azimuth angle range information, so that the terminal device performs signal measurement in the azimuth angle range. This narrows down an angle search range of the terminal device, reduces processing complexity of the terminal device, improves computing efficiency, and saves computing time.

In a possible design, the azimuth angle information includes the azimuth angle value and the first value, and the first value is 0.

Based on this possible design, when the location management network element sends the first value whose value is 0 to the terminal device, the terminal device may perform signal measurement in the direction indicated by the received azimuth angle value, to narrow down the angle search range of the terminal device, reduce the processing complexity of the terminal device, improve the computing efficiency, and save the computing time.

In a possible design, the zenith angle information includes one or more of the following information: a zenith angle value, a zenith angle range, a second value, preset zenith angle value information, and preset zenith angle range information. The zenith angle range is obtained by adding or subtracting the zenith angle value and the second value, the preset zenith angle value information indicates the zenith angle value, and the preset zenith angle range information indicates the zenith angle range.

Based on this possible design, the location management network element may indicate the zenith angle value to the terminal device by sending the zenith angle value or sending the preset zenith angle value information, so that the terminal device performs signal measurement in a direction indicated by the zenith angle value; or may indicate the zenith angle range to the terminal device by sending the zenith angle range, or sending the zenith angle value and the first value, or sending the preset zenith angle range information, so that the terminal device performs signal measurement in the zenith angle range. This narrows down an angle search range of the terminal device, reduces processing complexity of the terminal device, improves computing efficiency, and saves computing time.

In a possible design, the zenith angle information includes the zenith angle value and the second value, and the second value is 0.

Based on this possible design, when the location management network element sends the second value whose value is 0 to the terminal device, the terminal device may perform signal measurement in the direction indicated by the received zenith angle value, to narrow down the angle search range of the terminal device, reduce the processing complexity of the terminal device, improve the computing efficiency, and save the computing time.

In a possible design, the request location information further includes one or more of the following information: identification information of the access network element, first path type information, path quantity information, granularity information, and a reporting type. The first path type information indicates a type of a path corresponding to the signal that is of the access network element and that is measured by the terminal device; when the path quantity information indicates that a path quantity is N, the measurement result of measuring the signal of the access network element by the terminal device corresponds to N paths, where N $\geq$ 1; the granularity information indicates a granularity of the measurement result; and the reporting type is periodic reporting or aperiodic reporting.

In a possible design, when the reporting type is periodic reporting, the request location information may further include a reporting periodicity and/or a quantity of reporting times.

Based on the foregoing two possible designs, the request location information may further include one or more of the foregoing information, so that the terminal device performs signal measurement based on the request location information and reports the measurement result.

In a possible design, a type of a path includes one or more of the following: a first path, a strongest path, and a reflection path.

Based on this possible design, the terminal device may measure, based on a type of a path indicated by the location management network element, the signal sent by the access network element.

In a possible design, the request location information is long term evolution positioning protocol LPP request location information, and the provide location information is LPP provide location information.

In a possible design, the measurement result includes one or more of the following: an angle of arrival, a reference signal time difference RSTD, reference signal received power RSRP, and round trip time RTT. The angle of arrival is an angle at which the signal sent by the access network element reaches the terminal device.

For example, the RSTD may be a difference between a first moment and a second moment. The first moment may be a moment at which the signal sent by the access network element reaches the terminal device, and the second moment may be a moment at which a signal sent by a reference access network element reaches the terminal device. The RSRP may be beam-level RSRP. The RTT may be round trip time between the access network element and the terminal device.

Based on this possible design, the measurement result may include one or more of the foregoing, to provide a feasible solution for the terminal device to perform signal measurement and obtain the measurement result.

In a possible design, the angle of arrival includes a first azimuth angle value and a first zenith angle value, the first azimuth angle value is an included angle that is measured by the terminal device and that is on the horizontal plane and between the access network element and the terminal device, and the first zenith angle value is an included angle that is measured by the terminal device and that is between the zenith direction and the direction of the access network element relative to the terminal device.

Based on this possible design, when the terminal device and the access network element are not at a same height, the terminal device may report the angle of arrival to the location management network element by reporting the first azimuth angle value and the first zenith angle value, to improve reporting precision.

In a possible design, the provide location information further includes one or more of the following information: second indication information, and second path type information. The second indication information indicates an angular coordinate system corresponding to the measurement result, and the second path type information indicates a type of a path corresponding to the measurement result.

Based on this possible design, the terminal device may further report the second indication information, so that the location management network element determines the location information of the terminal device based on the measurement result and the angular coordinate system corresponding to the measurement result, to improve positioning precision. The terminal device may further report the second path type information, so that the location management network element determines, based on the second path type information, the type of the path corresponding to the measurement result.

In a possible design, when the first indication information indicates that the angle corresponding to the measurement result is within the angle indicated by the angle assistance information, the location management network element determines the location information of the terminal device based on the provide location information.

Based on this possible design, when the first indication information indicates that the angle corresponding to the measurement result is within the angle indicated by the angle assistance information, the location management network element may determine the location information of the terminal device based on the measurement result, to improve positioning precision.

In a possible design, before the location management network element sends the request location information to the terminal device, the method further includes: The location management network element obtains historical location information of the terminal device; and the location management network element determines the angle assistance information based on the historical location information of the terminal device.

Based on this possible design, the location management network element may determine the angle assistance information based on the historical location information of the terminal device, to improve accuracy of the angle assistance information.

In a possible design, the location management network element sends the request location information to the terminal device. The request location information includes X pieces of angle assistance information corresponding to X access network elements. An $i^{th}$ piece of angle assistance information indicates an angle between an $i^{th}$ access network element and the terminal device. X is greater than or equal to 1, and $1 \leq i \leq X$. The location management network element obtains the provide location information of the terminal device. The provide location information includes X measurement results corresponding to the X access network elements and X pieces of first indication information corresponding to the X measurement results. An $i^{th}$ measurement result is a result of measuring, by the terminal device based on the $i^{th}$ piece of angle assistance information, a signal sent by the $i^{th}$ access network element. An $i^{th}$ piece of first indication information indicates whether an angle corresponding to the $i^{th}$ measurement result is within the angle indicated by the $i^{th}$ piece of angle assistance information. The location management network element determines the location information of the terminal device based on the provide location information.

Based on this possible design, the location management network element may carry, in the request location information, angle assistance information corresponding to a plurality of access network elements, so that the terminal device determines, based on the X pieces of angle assistance information, the X measurement results corresponding to the X access network elements and the X pieces of first indication information, and sends the X measurement results and the X pieces of first indication information to the location management network element, so that the location management network element determines the location information of the terminal device based on the X measurement results, to improve positioning precision.

In a possible design, the $i^{th}$ piece of first indication information is carried in the $i^{th}$ measurement result.

In a possible design, the location management network element obtains the provide location information that is of the terminal device and that includes the X measurement results, and obtains the X pieces of first indication information corresponding to the X measurement results of the terminal device.

Based on the foregoing three possible designs, the terminal device may carry, in the provide location information, the X measurement results and the X pieces of first indication information corresponding to the X measurement results, and send the provide location information to the location management network element; or may carry the $i^{th}$ piece of first indication information in the $i^{th}$ measurement result and send the $i^{th}$ measurement result to the location management network element by using the provide location information; or may carry the X measurement results in the provide location information and send the provide location information to the location management network element, and send, to the location management network element by using other signaling, the X pieces of first indication information corresponding to the X measurement results. This is not limited. This provides a plurality of feasible solutions for the terminal device to send, to the location management network element, the measurement result and the first indication information corresponding to the measurement result.

In a possible design, the location management network element obtains provide location information that is of the terminal device and that includes Y measurement results. A $j^{th}$ measurement result is a result of measuring, by the terminal device based on a $j^{th}$ piece of angle assistance information, a signal sent by a $j^{th}$ access network element, and an angle corresponding to the $j^{th}$ measurement result is within an angle indicated by the $j^{th}$ piece of angle assistance information. $Y \leq X$; and $1 \leq j \leq Y$ The location management network element determines the location information of the terminal device based on the Y measurement results.

Based on this possible design, compared with that the terminal device sends, to the location management network element, the X measurement results and the X pieces of first indication information corresponding to the X measurement results, the terminal device may alternatively select a measurement result when sending the measurement result to the location management network element. That is, the terminal device sends, to the location management network element, the Y measurement results whose corresponding angles are within the angle indicated by the angle assistance information, so that the location management network element can directly determine the location information of the terminal device based on the received Y measurement results, to improve positioning precision and reduce signaling overheads.

In a possible design, the request location information further includes one or more of the following information: identification information of the X access network elements, X pieces of first path type information, X pieces of path quantity information, granularity information, and a reporting type. An $i^{th}$ piece of first path type information indicates a type of a path corresponding to the signal that is of the $i^{th}$ access network element and that is measured by the terminal device. When an $i^{th}$ piece of path quantity information indicates that a path quantity is N, a measurement result of measuring the signal of the $i^{th}$ access network element by the terminal device corresponds to N paths. $N \geq 1$.

In a possible design, the provide location information further includes one or more of the following information: second indication information, and X pieces of second path type information. The second indication information indicates an angular coordinate system corresponding to the X measurement results, and an $i^{th}$ piece of second path type information indicates a type of a path corresponding to the $i^{th}$ measurement result.

In a possible design, the location management network element obtains the historical location information of the terminal device; and determines the X pieces of angle assistance information based on the historical location information of the terminal device.

It should be noted that for descriptions of each of the X pieces of angle assistance information, each of the X measurement results, and each of the X pieces of first indication information, refer to the specific descriptions of the angle assistance information, the measurement result, and the first indication information. Details are not described.

According to a fifth aspect, this application provides a location management network element. The location management network element may implement functions performed by the location management network element in the fourth aspect or the possible designs of the fourth aspect, and the functions may be implemented by hardware by executing corresponding software. The hardware or the software includes one or more modules corresponding to the functions, for example, a transceiver module and a processing module. The transceiver module is configured to send request location information to a terminal device. The request location information includes angle assistance information, and the angle assistance information indicates an angle between an access network element and the terminal device. The transceiver module is further configured to obtain provide location information of the terminal device. The provide location information includes a measurement result and first indication information corresponding to the measurement result. The measurement result is a result of measuring, by the terminal device based on the angle assistance information, a signal sent by the access network element. The first indication information indicates whether an angle corresponding to the measurement result is within the angle indicated by the angle assistance information. The processing module is configured to determine location information of the terminal device based on the provide location information.

In a possible design, the first indication information is carried in the measurement result.

In a possible design, the transceiver module is further configured to obtain the provide location information that is of the terminal device and that includes the measurement result, and obtain the first indication information corresponding to the measurement result.

In a possible design, the transceiver module is further configured to obtain the provide location information that is of the terminal device and that includes the measurement result. The measurement result is a result of measuring, by the terminal device based on the angle assistance information, the signal sent by the access network element, and the angle corresponding to the measurement result is within the angle indicated by the angle assistance information.

In a possible design, the angle assistance information includes azimuth angle information and zenith angle information, the azimuth angle information indicates an included angle that is on a horizontal plane and between the access network element and the terminal device, and the zenith angle information indicates an included angle between a zenith direction and a direction of the access network element relative to the terminal device.

In a possible design, the azimuth angle information includes one or more of the following information: an azimuth angle value, an azimuth angle range, a first value, preset azimuth angle value information, and preset azimuth angle range information. The azimuth angle range is obtained by adding or subtracting the azimuth angle value and the first value, the preset azimuth angle value information indicates the azimuth angle value, and the preset azimuth angle range information indicates the azimuth angle range.

In a possible design, the azimuth angle information includes the azimuth angle value and the first value, and the first value is 0.

In a possible design, the zenith angle information includes one or more of the following information: a zenith angle value, a zenith angle range, a second value, preset zenith angle value information, and preset zenith angle range information. The zenith angle range is obtained by adding or subtracting the zenith angle value and the second value, the preset zenith angle value information indicates the zenith angle value, and the preset zenith angle range information indicates the zenith angle range.

In a possible design, the zenith angle information includes the zenith angle value and the second value, and the second value is 0.

In a possible design, the request location information further includes one or more of the following information: identification information of the access network element, first path type information, path quantity information, granularity information, and a reporting type. The first path type information indicates a type of a path corresponding to the signal

12

that is of the access network element and that is measured by the terminal device; when the path quantity information indicates that a path quantity is N, the measurement result of measuring the signal of the access network element by the terminal device corresponds to N paths, where $N \geq 1$; the granularity information indicates a granularity of the measurement result; and the reporting type is periodic reporting or aperiodic reporting.

In a possible design, when the reporting type is periodic reporting, the request location information may further include a reporting periodicity and/or a quantity of reporting times.

In a possible design, a type of a path includes one or more of the following: a first path, a strongest path, and a reflection path.

In a possible design, the request location information is long term evolution positioning protocol LPP request location information, and the provide location information is LPP provide location information.

In a possible design, the measurement result includes one or more of the following: an angle of arrival, a reference signal time difference RSTD, reference signal received power RSRP, and round trip time RTT. The angle of arrival is an angle at which the signal sent by the access network element reaches the terminal device.

For example, the RSTD may be a difference between a first moment and a second moment. The first moment may be a moment at which the signal sent by the access network element reaches the terminal device, and the second moment may be a moment at which a signal sent by a reference access network element reaches the terminal device. The RSRP may be beam-level RSRP. The RTT may be round trip time between the access network element and the terminal device.

In a possible design, when the measurement result includes the angle of arrival, the angle of arrival includes a first azimuth angle value and a first zenith angle value, the first azimuth angle value is an included angle that is measured by the terminal device and that is on the horizontal plane and between the access network element and the terminal device, and the first zenith angle value is an included angle that is measured by the terminal device and that is between the zenith direction and the direction of the access network element relative to the terminal device.

In a possible design, the provide location information further includes one or more of the following information: second indication information, and second path type information. The second indication information indicates an angular coordinate system corresponding to the measurement result, and the second path type information indicates a type of a path corresponding to the measurement result.

In a possible design, when the first indication information indicates that the angle corresponding to the measurement result is within the angle indicated by the angle assistance information, the processing module determines the location information of the terminal device based on the provide location information.

In a possible design, before sending the request location information to the terminal device, the transceiver module is further configured to obtain historical location information of the terminal device. The processing module is further configured to determine the angle assistance information based on the historical location information of the terminal device.

In a possible design, the transceiver module is further configured to send the request location information to the terminal device. The request location information includes X pieces of angle assistance information corresponding to X access network elements. An $i^{th}$ piece of angle assistance information indicates an angle between an $i^{th}$ access network element and the terminal device. X is greater than or equal to 1, and $1 \leq i \leq X$. The transceiver module is further configured to obtain the provide location information of the terminal device. The provide location information includes X measurement results corresponding to the X access network elements and X pieces of first indication information corresponding to the X measurement results. An $i^{th}$ measurement result is a result of measuring, by the terminal device based on the $i^{th}$ piece of angle assistance information, a signal sent by the $i^{th}$ access network element. An $i^{th}$ piece of first indication information indicates whether an angle corresponding to the $i^{th}$ measurement result is within the angle indicated by the $i^{th}$ piece of angle assistance information. The processing module is further configured to determine the location information of the terminal device based on the provide location information.

In a possible design, the $i^{th}$ piece of first indication information is carried in the $i^{th}$ measurement result.

In a possible design, the transceiver module is further configured to obtain the provide location information that is of the terminal device and that includes the X measurement results, and obtain the X pieces of first indication information corresponding to the X measurement results of the terminal device.

In a possible design, the transceiver module is further configured to obtain provide location information that is of the terminal device and that includes Y measurement results. A $j^{th}$ measurement result is a result of measuring, by the terminal device based on a $j^{th}$ piece of angle assistance information, a signal sent by a $j^{th}$ access network element, and an angle corresponding to the $j^{th}$ measurement result is within an angle indicated by the $j^{th}$ piece of angle assistance information. $Y \leq X$; and $1 \leq j \leq Y$ The processing module is further configured to determine the location information of the terminal device based on the Y measurement results.

In a possible design, the request location information further includes one or more of the following information: identification information of the X access network elements, X pieces of first path type information, X pieces of path quantity information, granularity information, and a reporting type. An $i^{th}$ piece of first path type information indicates a type of a path corresponding to the signal that is of the ith access network element and that is measured by the terminal device. When an ith piece of path quantity information indicates that a path quantity is N, a measurement result of measuring the signal of the ith access network element by the terminal device corresponds to N paths. $N \geq 1$.

In a possible design, the provide location information further includes one or more of the following information: second indication information, and X pieces of second path type information. The second indication information indicates an angular coordinate system corresponding to the X measurement results, and an ith piece of second path type information indicates a type of a path corresponding to the ith measurement result.

In a possible design, the transceiver module is further configured to obtain the historical location information of the terminal device. The processing module is further configured to determine the X pieces of angle assistance information based on the historical location information of the terminal device.

For descriptions of each of the X pieces of angle assistance information, each of the X measurement results, and each of the X pieces of first indication information, refer to the specific descriptions of the angle assistance information, the measurement result, and the first indication information. Details are not described.

It should be noted that the transceiver module may further include a receiving module and a sending module. The receiving module may be configured to perform a receiving operation performed by the transceiver module. The sending module may be configured to perform a sending operation performed by the transceiver module.

It should be noted that for a specific implementation of the location management network element, refer to a behavior function of the location management network element in the positioning information reporting method provided in any one of the fourth aspect or the possible designs of the fourth aspect. For technical effects brought by the location management network element, refer to technical effects brought by any possible design of the fourth aspect. Details are not described again.

According to a sixth aspect, this application provides a location management network element. The location management network element may be a location management network element or a chip or a system-on-a-chip in the location management network element. The location management network element may implement functions performed by the location management network element in the foregoing aspects or the possible designs, and the functions may be implemented by hardware. In a possible design, the location management network element may include a transceiver and a processor. The transceiver and the processor may be configured to support the location management network element to implement the function in any one of the fourth aspect or the possible designs of the fourth aspect. For example, the transceiver may be configured to send request location information to a terminal device. The request location information includes angle assistance information, and the angle assistance information indicates an angle between an access network element and the terminal device. The transceiver may be further configured to obtain provide location information of the terminal device. The provide location information includes a measurement result and first indication information corresponding to the measurement result. The measurement result is a result of measuring, by the terminal device based on the angle assistance information, a signal sent by the access network element. The first indication information indicates whether an angle corresponding to the measurement result is within the angle indicated by the angle assistance information. The processor may be configured to determine location information of the terminal device based on the provide location information. In another possible design, the location management network element may further include a memory. The memory is configured to store computer-executable instructions and data that are necessary for the location management network element. When the location management network element runs, the transceiver and the processor execute the computer-executable instructions stored in the memory, so that the location management network element performs the positioning information reporting method according to any one of the fourth aspect or the possible designs of the fourth aspect.

In a possible design, the transceiver may further include a receiver and a transmitter. The receiver may be configured to perform a receiving operation performed by the transceiver. The transmitter may be configured to perform a sending operation performed by the transceiver.

It should be noted that the transceiver may alternatively be described as an input/output unit. The input/output unit may alternatively include an input unit and an output unit. The input unit may be configured to perform the receiving operation performed by the transceiver, and the output unit may be configured to perform the sending operation performed by the transceiver.

For a specific implementation of the location management network element in the sixth aspect, refer to a behavior function of the location management network element in the positioning information reporting method provided in any one of the fourth aspect or the possible designs of the fourth aspect.

According to a seventh aspect, this application provides a positioning information reporting method. The method may include: A terminal device sends request assistance data to a location management network element. The terminal device obtains provide assistance information of the location management network element. The provide assistance information includes angle assistance information, and the angle assistance information indicates an angle between an access network element and the terminal device. The terminal device measures, based on the provide assistance information, a signal sent by the access network element, to obtain a measurement result. The terminal device determines location information of the terminal device based on the measurement result.

According to the seventh aspect, the terminal device may measure or preferably measure, in the angle indicated by the angle assistance information, the signal sent by the access network element, to narrow down an angle search range, reduce a measurement error of measuring, by the terminal device, the signal sent by the access network element, reduce processing complexity of the terminal device, improve computing efficiency, and save computing time. In addition, when measuring the signal sent by the access network element, the terminal device may further determine whether the measurement result corresponds to a LOS path or an NLOS path, and further determines the location information of the terminal device based on the measurement result corresponding to the LOS path, to reduce an error of the location information that is of the terminal device and that is determined based on the measurement result of the terminal device, and improve positioning precision.

In a possible design, the provide assistance information further includes one or more of the following information: identification information of the access network element, first path type information, and path quantity information. The first path type information indicates a type of a path corresponding to the signal that is of the access network element and that is measured by the terminal device. When the path quantity information indicates that a path quantity is N, the measurement result of measuring the signal of the access network element by the terminal device corresponds to N paths. $N \geq 1$.

In a possible design, the terminal device sends the location information of the terminal device to the location management network element.

In a possible design, the terminal device sends the request assistance data to the location management network element. The terminal device obtains the provide assistance information of the location management network element. The provide assistance information includes X pieces of angle assistance information corresponding to X access network elements. An $i^{th}$ piece of angle assistance information indicates an angle between an $i^{th}$ access network element and the terminal device. X is greater than or equal to 1, and $1 \leq i \leq X$. The terminal device measures, based on the provide assistance information, signals sent by the X access network elements, to obtain X measurement results corresponding to the X access network elements. An $i^{th}$ measurement result is a result of measuring, by the terminal device based on the $i^{th}$ piece of angle assistance information, a signal sent by an $i^{th}$ access network element. The terminal device determines the location information of the terminal device based on the X measurement results.

Based on this possible design, when the provide assistance information includes angle assistance information corresponding to a plurality of access network elements, the terminal device may determine, based on the X pieces of angle assistance information, the X measurement results corresponding to the X access network elements, and determine the location information of the terminal device based on the X measurement results, to improve positioning precision.

In a possible design, the terminal device determines the location information of the terminal device based on Y measurement results. A $j^{th}$ measurement result is a result of measuring, by the terminal device based on a $j^{th}$ piece of angle assistance information, a signal sent by a $j^{th}$ access network element, and an angle corresponding to the $j^{th}$ measurement result is within an angle indicated by the $j^{th}$ piece of angle assistance information. $Y \leq X$; and $1 \leq j \leq Y$

Based on this possible design, the terminal device may select, from the X measurement results, the Y measurement results corresponding to the LOS path, and determine the location information of the terminal device based on the Y measurement results, to improve positioning precision.

In a possible design, the provide assistance information further includes one or more of the following information: identification information of the X access network elements, X pieces of first path type information, and X pieces of path quantity information. An $i^{th}$ piece of first path type information indicates a type of a path corresponding to the signal that is of the $i^{th}$ access network element and that is measured by the terminal device. When an $i^{th}$ piece of path quantity information indicates that a path quantity is N, a measurement result of measuring the signal of the $i^{th}$ access network element by the terminal device corresponds to N paths. $N \geq 1$.

In a possible design, the terminal device performs, based on the request location information, beamforming at the angle indicated by the X pieces of angle assistance information.

It should be noted that, for descriptions of the angle assistance information and the measurement result in this application, refer to descriptions of the angle assistance information and the measurement result in any one of the first aspect or the possible designs of the first aspect. Details are not described again.

According to an eighth aspect, this application provides a terminal device. The terminal device may implement functions performed by the terminal device in the seventh aspect or the possible designs of the seventh aspect, and the functions may be implemented by hardware by executing corresponding software. The hardware or the software includes one or more modules corresponding to the functions, for example, a transceiver module and a processing module. The transceiver module is configured to send request assistance data to a location management network element. The transceiver module is further configured to obtain provide assistance information of the location management network element. The provide assistance information includes angle assistance information, and the angle assistance information indicates an angle between an access network element and the terminal device. The processing module is configured to measure, based on the provide assistance information, a signal sent by the access network element, to obtain a measurement result. The terminal device determines location information of the terminal device based on the measurement result.

In a possible design, the provide assistance information further includes one or more of the following information: identification information of the access network element, first path type information, and path quantity information. The first path type information indicates a type of a path corresponding to the signal that is of the access network element and that is measured by the terminal device. When the path quantity information indicates that a path quantity is N, the measurement result of measuring the signal of the access network element by the terminal device corresponds to N paths. $N \geq 1$.

In a possible design, the transceiver module is further configured to send the location information of the terminal device to the location management network element.

In a possible design, the transceiver module is further configured to send the request assistance data to the location management network element. The transceiver module is further configured to obtain the provide assistance information of the location management network element. The provide assistance information includes X pieces of angle assistance information corresponding to X access network elements. An $i^{th}$ piece of angle assistance information indicates an angle between an $i^{th}$ access network element and the terminal device. X is greater than or equal to 1, and $1 \leq i \leq X$. The processing module is further configured to measure, based on the provide assistance information, signals sent by the X access network elements, to obtain X measurement results corresponding to the X access network elements. An $i^{th}$ measurement result is a result of measuring, by the terminal device based on the $i^{th}$ piece of angle assistance information, a signal sent by an $i^{th}$ access network element. The processing module is further configured to determine the location information of the terminal device based on the X measurement results.

In a possible design, the processing module is further configured to determine the location information of the terminal device based on Y measurement results. A $j^{th}$ measurement result is a result of measuring, by the terminal device based on a $j^{th}$ piece of angle assistance information, a signal sent by a $j^{th}$ access network element, and an angle corresponding to the $j^{th}$ measurement result is within an angle indicated by the $j^{th}$ piece of angle assistance information. $Y \leq X$; and $1 \leq j \leq Y$.

In a possible design, the provide assistance information further includes one or more of the following information: identification information of the X access network elements, X pieces of first path type information, and X pieces of path quantity information. An $i^{th}$ piece of first path type information indicates a type of a path corresponding to the signal that is of the $i^{th}$ access network element and that is measured by the terminal device. When an $i^{th}$ piece of path quantity information indicates that a path quantity is N, a measurement result of measuring the signal of the $i^{th}$ access network element by the terminal device corresponds to N paths. $N \geq 1$.

In a possible design, the processing module is further configured to perform, based on the request location information, beamforming at the angle indicated by the X pieces of angle assistance information.

It should be noted that the transceiver module may further include a receiving module and a sending module. The receiving module may be configured to perform a receiving operation performed by the transceiver module. The sending module may be configured to perform a sending operation performed by the transceiver module.

It should be noted that for a specific implementation of the terminal device, refer to a behavior function of the terminal device in the positioning information reporting method provided in any one of the seventh aspect or the possible designs of the seventh aspect. For technical effects brought by the terminal device, refer to technical effects brought by any possible design of the seventh aspect. Details are not described again.

According to a ninth aspect, this application provides a terminal device. The terminal device may be a terminal device or a chip or a system-on-a-chip in the terminal device. The terminal device may implement functions performed by the terminal device in the foregoing aspects or the possible designs, and the functions may be implemented by hardware. In a possible design, the terminal device may include a transceiver and a processor. The transceiver and the processor may be configured to support the terminal device in implementing the functions in any one of the first aspect or the possible designs of the first aspect. For example, the transceiver may be configured to send request assistance data to a location management network element. The transceiver may be further configured to obtain provide assistance information of the location management network element. The provide assistance information includes angle assistance information, and the angle assistance information indicates an angle between an access network element and the terminal device. The processor may be configured to measure, based on the provide assistance information, a signal sent by the access network element, to obtain a measurement result. The terminal device determines location information of the terminal device based on the measurement result. In another possible design, the terminal device may further include a memory. The memory is configured to store computer-executable instructions and data that are necessary for the terminal device. When the terminal device runs, the transceiver and the processor execute the computer-executable instructions stored in the memory, so that the terminal device performs the positioning information reporting method according to any one of the seventh aspect or the possible designs of the seventh aspect.

In a possible design, the transceiver may further include a receiver and a transmitter. The receiver may be configured to perform a receiving operation performed by the transceiver. The transmitter may be configured to perform a sending operation performed by the transceiver.

It should be noted that the transceiver may alternatively be described as an input/output unit. The input/output unit may alternatively include an input unit and an output unit. The input unit may be configured to perform the receiving operation performed by the transceiver, and the output unit may be configured to perform the sending operation performed by the transceiver.

For a specific implementation of the terminal device in the ninth aspect, refer to a behavior function of the terminal device in the positioning information reporting method provided in any one of the seventh aspect or the possible designs of the seventh aspect.

According to a tenth aspect, this application provides a positioning information reporting method. The method may include: A location management network element obtains request assistance data of a terminal device. The location management network element sends provide assistance information to the terminal device. The provide assistance information includes angle assistance information, and the angle assistance information indicates an angle between an access network element and the terminal device.

According to the tenth aspect, the location management network element sends the angle assistance information to the terminal device, so that the terminal device can measure or preferably measure, in the angle indicated by the angle assistance information, a signal sent by an access network element, to narrow down an angle search range, reduce a measurement error of measuring, by the terminal device, the signal sent by the access network element, reduce processing complexity of the terminal device, improve computing efficiency, and save computing time.

In a possible design, the provide assistance information further includes one or more of the following information: identification information of the access network element, first path type information, and path quantity information. The first path type information indicates a type of a path corresponding to the signal that is of the access network element and that is measured by the terminal device. When the path quantity information indicates that a path quantity is N, the measurement result of measuring the signal of the access network element by the terminal device corresponds to N paths. $N \geq 1$.

In a possible design, the location management network element obtains location information of the terminal device. The location information of the terminal device is determined by the terminal device based on a measurement result, and the measurement result is a result of measuring, by the terminal device based on the angle assistance information, a signal sent by the access network element.

In a possible design, the location management network element obtains the request assistance data of the terminal device. The location management network element sends the provide assistance information to the terminal device. The provide assistance information includes X pieces of angle assistance information corresponding to X access network elements. An $i^{th}$ piece of angle assistance information indicates an angle between an $i^{th}$ access network element and the terminal device. X is greater than or equal to 1, and $1 \leq i \leq X$.

Based on this possible design, the location management network element may carry, in the provide assistance information, angle assistance information corresponding to a plurality of access network elements, so that the terminal device can determine, based on the X pieces of angle assistance information, X measurement results corresponding to the X access network elements, and determine the location information of the terminal device based on the X measurement results, to improve positioning precision.

In a possible design, the provide assistance information further includes one or more of the following information: identification information of the X access network elements, X pieces of first path type information, and X pieces of path quantity information. An $i^{th}$ piece of first path type information indicates a type of a path corresponding to the signal that is of the $i^{th}$ access network element and that is measured by the terminal device. When an $i^{th}$ piece of path quantity information indicates that a path quantity is N, a measurement result of measuring the signal of the $i^{th}$ access network element by the terminal device corresponds to N paths. $N \geq 1$.

It should be noted that, for descriptions of the angle assistance information and the measurement result in this application, refer to descriptions of the angle assistance information and the measurement result in any one of the first aspect or the possible designs of the first aspect. Details are not described again.

According to an eleventh aspect, this application provides a location management network element. The location management network element may implement functions performed by the location management network element in the tenth aspect or the possible designs of the tenth aspect, and the functions may be implemented by hardware by executing corresponding software. The hardware or the software includes one or more modules corresponding to the functions, for example, a transceiver module. The transceiver module is configured to obtain request assistance data of a terminal device. The transceiver module is further configured to send provide assistance information to the terminal device. The provide assistance information includes angle assistance information, and the angle assistance information indicates an angle between an access network element and the terminal device.

In a possible design, the provide assistance information further includes one or more of the following information: identification information of the access network element, first path type information, and path quantity information. The first path type information indicates a type of a path corresponding to the signal that is of the access network element and that is measured by the terminal device. When the path quantity information indicates that a path quantity is N, the measurement result of measuring the signal of the access network element by the terminal device corresponds to N paths. $N \geq 1$.

In a possible design, the transceiver module is further configured to obtain location information of the terminal device. The location information of the terminal device is determined by the terminal device based on a measurement result, and the measurement result is a result of measuring, by the terminal device based on the angle assistance information, a signal sent by the access network element.

In a possible design, the transceiver module is further configured to obtain the request assistance data of the terminal device. The transceiver module is further configured to send the provide assistance information to the terminal device. The provide assistance information includes X pieces of angle assistance information corresponding to X access network elements. An $i^{th}$ piece of angle assistance information indicates an angle between an $i^{th}$ access network element and the terminal device. X is greater than or equal to 1, and $1 \leq i \leq X$.

In a possible design, the provide assistance information further includes one or more of the following information: identification information of the X access network elements, X pieces of first path type information, and X pieces of path quantity information. An $i^{th}$ piece of first path type information indicates a type of a path corresponding to the signal that is of the $i^{th}$ access network element and that is measured by the terminal device. When an $i^{th}$ piece of path quantity information indicates that a path quantity is N, a measurement result of measuring the signal of the $i^{th}$ access network element by the terminal device corresponds to N paths. $N \geq 1$.

It should be noted that the transceiver module may further include a receiving module and a sending module. The receiving module may be configured to perform a receiving operation performed by the transceiver module. The sending module may be configured to perform a sending operation performed by the transceiver module.

It should be noted that for a specific implementation of the location management network element, refer to a behavior function of the location management network element in the positioning information reporting method provided in any one of the tenth aspect or the possible designs of the tenth aspect. For technical effects brought by the location management network element, refer to technical effects brought by any possible design of the tenth aspect. Details are not described again.

According to a twelfth aspect, this application provides a location management network element. The location management network element may be a location management network element or a chip or a system-on-a-chip in the location management network element. The location management network element may implement functions performed by the location management network element in the foregoing aspects or the possible designs, and the functions may be implemented by hardware. In a possible design, the location management network element may include a transceiver. The transceiver may be configured to support the location management network element to implement the function in any one of the tenth aspect or the possible designs of the tenth aspect. For example, the transceiver may be configured to obtain request assistance data of a terminal device. The transceiver may be further configured to send provide assistance information to the terminal device. The provide assistance information includes angle assistance information, and the angle assistance information indicates an angle between an access network element and the terminal device. In another possible design, the location management network element may further include a processor and a memory. The memory is configured to store computer-executable instructions and data that are necessary for the location management network element. When the location management network element runs, the transceiver and the processor execute the computer-executable instructions stored in the memory, so that the location management network element performs the positioning information reporting method according to any one of the tenth aspect or the possible designs of the tenth aspect.

In a possible design, the transceiver may further include a receiver and a transmitter. The receiver may be configured to perform a receiving operation performed by the transceiver. The transmitter may be configured to perform a sending operation performed by the transceiver.

It should be noted that the transceiver may alternatively be described as an input/output unit. The input/output unit may alternatively include an input unit and an output unit. The input unit may be configured to perform the receiving operation performed by the transceiver, and the output unit may be configured to perform the sending operation performed by the transceiver.

For a specific implementation of the location management network element in the twelfth aspect, refer to a behavior function of the location management network element in the positioning information reporting method provided in any one of the tenth aspect or the possible designs of the tenth aspect.

According to a thirteenth aspect, a communication apparatus is provided. The communication apparatus includes one or more processors. The one or more processors are configured to run a computer program or instructions. When the one or more processors execute the computer instruction or the instructions, the communication apparatus is enabled to perform the positioning information reporting method according to any one of the first aspect or the possible designs of the first aspect; or perform the positioning information reporting method according to any one of the fourth aspect or possible designs of the fourth aspect; or perform the positioning information reporting method according to any one of the seventh aspect or the possible designs of the seventh aspect; or perform the positioning information reporting method according to any one of the tenth aspect or the possible designs of the tenth aspect.

In a possible design, the communication apparatus further includes one or more communication interfaces, the one or more communication interfaces are coupled to the one or more processors, and the one or more communication interfaces are configured to communicate with another module other than the communication apparatus. The communication interface may also be described as an input/output interface. The input/output interface may include an input interface and an output interface.

In a possible design, the communication apparatus further includes one or more memories, the one or more memories are coupled to the one or more processors, and the one or more memories are configured to store the foregoing computer program or instructions. In a possible implementation, the memory is located outside the communication apparatus. In another possible implementation, the memory is located inside the communication apparatus. In this application, the processor and the memory may alternatively be integrated into one component. In other words, the processor and the memory may alternatively be integrated together.

According to a fourteenth aspect, a communication apparatus is provided. The communication apparatus includes an interface circuit and a logic circuit. The interface circuit is coupled to the logic circuit. The logic circuit is configured to perform the positioning information reporting method according to any one of the first aspect or the possible designs of the first aspect; or perform the positioning information reporting method according to any one of the fourth aspect or possible designs of the fourth aspect; or perform the positioning information reporting method according to any one of the seventh aspect or the possible designs of the seventh aspect; or perform the positioning information reporting method according to any one of the tenth aspect or the possible designs of the tenth aspect. The interface circuit is configured to communicate with another module other than the communication apparatus.

The interface circuit may also be described as an input/output circuit. The input/output circuit may include an input circuit and an output circuit.

According to a fifteenth aspect, a computer-readable storage medium is provided. The computer-readable storage medium stores computer instructions or a program. When the computer instructions or the program runs on a computer, the computer is enabled to perform the positioning information reporting method according to any one of the first aspect or the possible designs of the first aspect; or perform the positioning information reporting method according to any one of the fourth aspect or possible designs of the fourth aspect; or perform the positioning information reporting method according to any one of the seventh aspect or the possible designs of the seventh aspect; or perform the positioning information reporting method according to any one of the tenth aspect or the possible designs of the tenth aspect.

According to a sixteenth aspect, a computer program product including computer instructions is provided. When the computer program product runs on a computer, the computer is enabled to perform the positioning information reporting method according to any one of the first aspect or the possible designs of the first aspect; or perform the positioning information reporting method according to any one of the fourth aspect or possible designs of the fourth aspect; or perform the positioning information reporting method according to any one of the seventh aspect or the possible designs of the seventh aspect; or perform the positioning information reporting method according to any one of the tenth aspect or the possible designs of the tenth aspect.

According to a seventeenth aspect, this application provides a computer program. When the computer program runs on a computer, the computer is enabled to perform the positioning information reporting method according to any one of the first aspect or the possible designs of the first aspect; or perform the positioning information reporting method according to any one of the fourth aspect or possible designs of the fourth aspect; or perform the positioning information reporting method according to any one of the seventh aspect or the possible designs of the seventh aspect; or perform the positioning information reporting method according to any one of the tenth aspect or the possible designs of the tenth aspect.

For a technical effect brought by any design of the thirteenth aspect to the seventeenth aspect, refer to a technical effect brought by any possible design of the first aspect, or refer to a technical effect brought by any possible design of the fourth aspect, or refer to a technical effect brought by any possible design of the seventh aspect, or refer to a technical effect brought by any possible design of the tenth aspect. Details are not described again.

According to an eighteenth aspect, a communication system is provided. The communication system includes the terminal device according to the second aspect or the third aspect, and the location management network element according to the fifth aspect or the sixth aspect; or includes the terminal device according to the eighth aspect or the ninth aspect, and the location management network element according to the eleventh aspect or the twelfth aspect.

## BRIEF DESCRIPTION OF DRAWINGS

FIG. 1 is a schematic diagram of composition of a communication system according to an embodiment of this application;

FIG. 2a is a schematic diagram of composition of a communication system according to an embodiment of this application;

FIG. 2b is a schematic diagram of composition of a communication system according to an embodiment of this application;

FIG. 3 is a schematic diagram of a structure of a communication apparatus according to an embodiment of this application;

FIG. 4 is a flowchart of a positioning information reporting method according to an embodiment of this application;

FIG. 5 is a schematic diagram of angle assistance information according to an embodiment of this application;

FIG. 6 is a schematic diagram of an angle of arrival according to an embodiment of this application;

FIG. 7 is a schematic diagram of an angle of arrival according to an embodiment of this application;

FIG. 8 is a schematic diagram of a DL-TDOA positioning technology according to an embodiment of this application;

FIG. 9 is a schematic diagram of a DL-AOD positioning technology according to an embodiment of this application;

FIG. 10 is a schematic diagram of a Multi-RTT positioning technology according to an embodiment of this application;

FIG. 11 is a schematic diagram of positioning precision based on spatial filtering according to an embodiment of this application;

FIG. 12 is a schematic diagram of a DL-AOA positioning technology according to an embodiment of this application;

FIG. 13 is a schematic diagram of a Multi-RTT positioning technology according to an embodiment of this application;

FIG. 14 is a flowchart of a positioning information reporting method according to an embodiment of this application;

FIG. 15 is a flowchart of a positioning information reporting method according to an embodiment of this application;

FIG. 16 is a flowchart of a positioning information reporting method according to an embodiment of this application;

FIG. 17 is a schematic diagram of composition of a terminal device according to an embodiment of this application; and

FIG. 18 is a schematic diagram of composition of a location management network element according to an embodiment of this application.

## DESCRIPTION OF EMBODIMENTS

With rapid development of communication technologies, high-precision positioning has been gradually determined as an important research project of a 5th generation mobile communication system (5th generation mobile networks or 5th generation wireless systems, 5G) in the 3rd generation partnership project (3rd Generation Partnership Project, 3GPP). A positioning scenario in a new radio (new radio, NR) communication system may include enhanced mobile broadband (enhanced mobile broadband, eMBB) outdoor, eMBB indoor, ultra-reliable and low latency communications (ultra-reliable and low latency communications, URLLC), massive machine type of communication (massive machine type of communication, mMTC)/internet of things (internet of things, IoT), and the like. In addition, a communication system is required to have features of high security, scalability, high availability and precision guarantee in high-speed applications. As positioning requirements and positioning scenarios are increasingly extensive, a requirement for positioning precision is increasingly high.

A positioning technology may include an uplink positioning technology, a downlink positioning technology, and an uplink/downlink positioning technology. In the uplink positioning technology, an access network element may detect a channel sounding reference signal (sounding reference signal, SRS) sent by a terminal device. In the downlink positioning technology, a terminal device may detect a positioning reference signal (positioning reference signal, PRS) sent by an access network element. In the uplink/downlink positioning technology, a terminal device may detect a PRS signal sent by an access network element, or the access network element may detect an SRS signal sent by the terminal device.

For example, the downlink positioning technology may include a downlink time difference of arrival (downlink time difference of arrival, DL-TDOA) technology and a downlink time angle of departure (downlink time angle of departure, DL-AOD) technology. The uplink/downlink positioning technology may include a multi-round-trip time (multi-round-trip time, Multi-RTT) technology.

Currently, a location management network element may determine location information of a terminal device by measuring a latency by using a positioning technology, for example, a DL-TDOA technology, or a Multi-RTT technology, based on signal latencies that are between the terminal device and a plurality of access network elements and that are reported by the terminal device. Alternatively, a location management network element may determine location information of a terminal device by measuring an angle by using a positioning technology, for example, a DL-AOD technology, based on measurement values that are of reference signal received power (reference signal received power, RSRP) between the terminal device and a plurality of access network elements and that are reported by the terminal device, and a transmit beam pattern of each access network element.

Because a signal may be transmitted in a straight line between the terminal device and the access network element by using a line of sight (line of sight, LOS) path, or may be transmitted through reflection or diffraction of a wall or another object by using a non-line of sight (non-line of sight, NLOS) path, compared with that of the NLOS path, location information of the terminal device obtained through calculation based on a measurement value corresponding to the LOS path is more accurate. When the terminal device measures, by using the foregoing positioning technology, a signal sent by the access network element, the terminal device may select a signal corresponding to an earliest arriving path or a signal corresponding to a path with strongest energy, and measure a latency or an angle of the signal.

However, when the terminal device measures a latency of a signal, if time at which a signal transmitted by using the NLOS path arrives at the terminal device and time at which a signal transmitted by using the LOS path arrives at the terminal device is very close (for example, within a sampling interval), if the terminal device measures the signal transmitted by using the NLOS path, or the terminal device cannot accurately detect the LOS path due to excessive energy of the NLOS path, an error of a latency obtained by the terminal device through measurement may be large. As a result, an error of the location information of the terminal device determined by the location management network element is large, and positioning precision is affected.

For example, a 100 MHz operating bandwidth is used. If a latency error is within a sampling interval, a corresponding distance error is 3 m.

When the terminal device measures an angle of a signal, if a distance between the NLOS path and the LOS path is close, if the terminal device measures a signal transmitted by using the NLOS path, an RSRP error obtained by the terminal device through measurement may be large. As a result, an error of the location information of the terminal device determined by the location management network element based on the RSRP is large, and positioning precision is affected. In addition, when measuring a signal by using an angle-based positioning technology, the terminal device needs to search within an angle range (for example, -90° to 90°) covered by an antenna panel. Correspondingly, a computing speed and complexity of the terminal device are high.

It should be noted that, for an access network element that is far away from the terminal device, an angle deviation has great impact on positioning precision.

In conclusion, when the terminal device measures, by using the foregoing positioning technology, a signal sent by the access network element, if the terminal device measures a signal transmitted by using the NLOS path, a latency error or an RSRP error of the signal obtained by the terminal device through measurement is large. As a result, an error of the location information of the terminal device determined by the location management network element is large, and positioning precision is affected.

To resolve the technical problem, embodiments of this application provide a positioning information reporting method and an apparatus. A terminal device may obtain request location information that is of a location management network element and that includes angle assistance information. The angle assistance information may indicate an angle between an access network element and the terminal device. The terminal device may send, to the location management network element, provide location information including a measurement result and first indication information corresponding to the measurement result. The measurement result may be a result of measuring, by the terminal device based on the angle assistance information, a signal sent by the access network element. The first indication information indicates whether an angle corresponding to the measurement result is within the angle indicated by the angle assistance information.

In embodiments of this application, the terminal device may measure or preferably measure, in the angle indicated by the angle assistance information, the signal sent by the access network element, to narrow down an angle search range, reduce a measurement error of measuring, by the terminal device, the signal sent by the access network element, reduce processing complexity of the terminal device, improve computing efficiency, and save computing time. In addition, when reporting the measurement result to the location management network element, the terminal device may further carry the first indication information indicating whether an angle or a direction of arrival corresponding to the measurement result is within the angle indicated by the angle assistance information, so that the location management network element determines, based on the first indication information, whether the measurement result corresponds to a LOS path or an NLOS path, and further determines location information of the terminal device based on the measurement result corresponding to the LOS path, to reduce an error of the location information that is of the terminal device and that is determined by the location management network element based on the measurement result of the terminal device, and improve positioning precision.

The following describes implementations of embodiments of this application in detail with reference to accompanying drawings in this specification.

The positioning information reporting method provided in embodiments of this application may be used in any communication system. For example, the communication system may be a long term evolution (long term evolution, LTE) system, or may be a 5G NR communication system, an NR vehicle-to-everything (vehicle-to-everything, V2X) system, or another next-generation communication system. This is not limited.

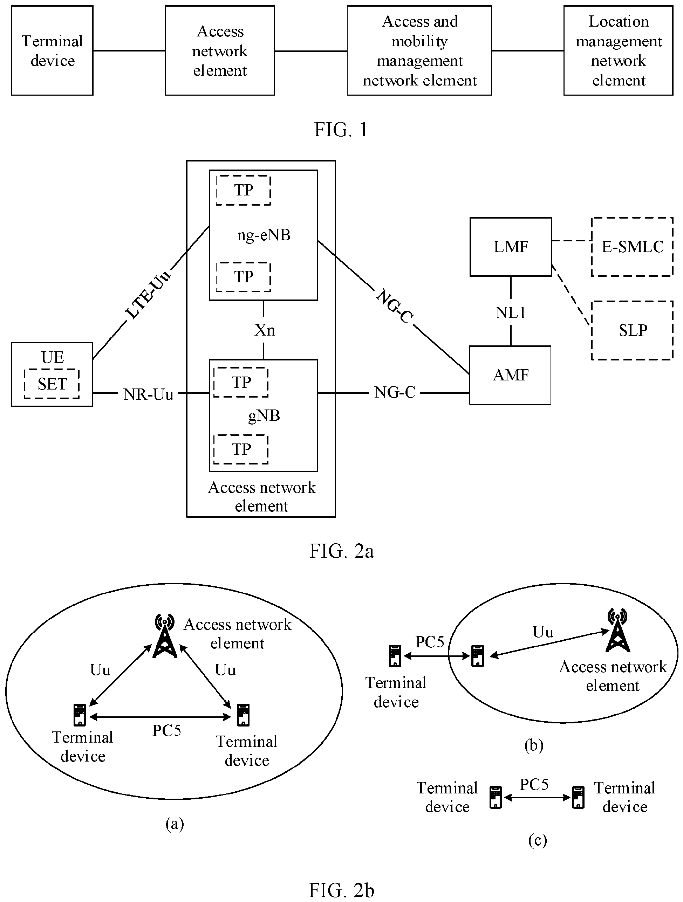

The positioning information reporting method provided in embodiments of this application may be applied to various communication scenarios, for example, may be applied to one or more of the following communication scenarios: eMBB, URLLC, MTC, mMTC, device to device (device to device, D2D), V2X, vehicle to vehicle (vehicle to vehicle, V2V), IoT, and the like. The following describes, by using FIG. 1 as an example, the positioning information reporting method provided in embodiments of this application.

FIG. 1 is a schematic diagram of a communication system according to an embodiment of this application. As shown in FIG. 1, the communication system may include a terminal device, an access network element, and a core network element. The core network element may include an access and mobility management network element and a location management network element.

The terminal device in FIG. 1 may be located within coverage of a beam/cell of an access network element. The terminal device may communicate with the access network element by using a user to network interface universal (user to network interface universal, Uu) link.

The terminal device (terminal) in FIG. 1 may also be referred to as user equipment (user equipment, UE), a mobile station (mobile station, MS), a mobile terminal (mobile terminal, MT), or the like. Specifically, the terminal device in FIG. 1 may be a handheld device, a vehicle-mounted device, a wearable device, or a computing device that has a wireless communication function. For example, the terminal device may be a mobile phone (mobile phone), a tablet computer, or a computer having a wireless transceiver function; or may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent connected vehicle, an uncrewed aerial vehicle having a UAV-to-UAV (UAV-to-UAV, U2U) communication capability, a road side unit (road side unit, RSU), or the like. This is not limited.

The access network element in FIG. 1 may be any device that has a wireless transceiver function and is configured to connect the terminal device to a core network element. The access network element is mainly configured to implement functions such as a wireless physical control function, resource scheduling and radio resource management, radio access control, mobility management, quality of service management, and data encryption and compression, and provides reliable wireless transmission protocols and data encryption protocols. The access network element may also be referred to as an access network (access network, AN)/radio access network (radio access network, RAN) device. Specifically, the access network element may be a device supporting wired access, or may be a device supporting wireless access. For example, the access network element may be a macro base station, a micro base station, a relay station, an access point, or the like.

For example, as shown in FIG. 2a, the access network element in embodiments of this application may be a base station in NR. A base station in 5G NR may alternatively be referred to as a transmission reception point (transmission reception point, TRP) or a next generation NodeB (next generation NodeB, gNB), or may be a base transceiver station (base transceiver station, BTS) in a global system for mobile communications (global system for mobile communications, GSM) or code division multiple access (code division multiple access, CDMA), or may be a NodeB (NodeB, NB) in a wideband code division multiple access (wideband code division multiple access, WCDMA) system. The access network element may alternatively be an evolved NodeB (evolved NodeB, eNB or eNodeB) in a long term evolution LTE system. The access network element may alternatively be an enhanced NodeB (enhanced NodeB, eNB), a next generation evolved NodeB (next generation evolved NodeB, ng-eNB), an access point (access point, AP), a transmission point (transmission point, TP), or another access node. This is not limited. It should be noted that access network elements may communicate with each other through an Xn interface.

The access and mobility management network element in FIG. 1 may send, to the location management network element, data sent by the access network element, or may send, to the access network element, data sent by the location management network element. The access and mobility management network element is equivalent to a router for communication between the access network element and the location management network element.

For example, as shown in FIG. 2a, the access and mobility management network element may be an access and mobility management function (access and mobility management function, AMF) in a 5G communication system. The access network element may communicate with the AMF through an interface between the gNB and 5G core network control plane (the interface between the gNB and 5G core network control plane, NG-C).

The location management network element in FIG. 1 may perform positioning calculation on the terminal device based on a measurement result sent by the terminal device, to obtain location information of the terminal device.

For example, as shown in FIG. 2a, the location management network element may be a location management function (location management function, LMF) in the 5G communication system, and the LMF may also be referred to as a positioning server or a positioning service management function. The LMF may communicate with the AMF through an NL1 interface.

As shown in FIG. 2a, the core network element may further include one or more of a service location protocol (service location protocol, SLP) and an evolved serving mobile location center (evolved serving mobile location center, E-SMLC). This is not limited.

It should be understood that FIG. 2a is merely an example for describing a communication system to which embodiments of this application are applicable, and does not specifically limit types, quantities, connection manners, and the like of network elements included in the communication system to which this application is applicable. For example, the E-SMLC or SLP is not essential. For example, the ng-eNB includes a plurality of transmission points (transmission points, TPs) in some embodiments, and the gNB includes a plurality of transmission reception points (transmission reception points, TRPs) in some embodiments. The terminal device is referred to as a SUPL enabled terminal (SUPL enabled terminal, SET) in some embodiments, or includes a SET in some embodiments, and the SUPL is a secure user plane location (secure user plane location).

In addition, terminal devices may communicate with each other by using a side link (side link, SL). Specifically, the terminal devices may communicate with each other through a PC5 interface.

Communication between terminal devices may be classified into the following three communication scenarios based on whether the terminal device is within coverage of an access network element: an in-coverage scenario, a partial-coverage scenario, and an out-of-coverage scenario.

As shown in (a) in FIG. 2b, the in-coverage scenario may be a communication scenario in which all terminal devices that perform communication through the PC5 interface are within coverage of the access network element. As shown in (b) in FIG. 2b, the partial-coverage scenario may mean that one terminal device that performs communication through the PC5 interface is within coverage of the access network element, and another terminal device is outside the coverage of the access network element. As shown in (c) in FIG. 2b, the out-of-coverage scenario may mean that all terminal devices that perform communication through the PC5 interface are out of coverage of the access network element.

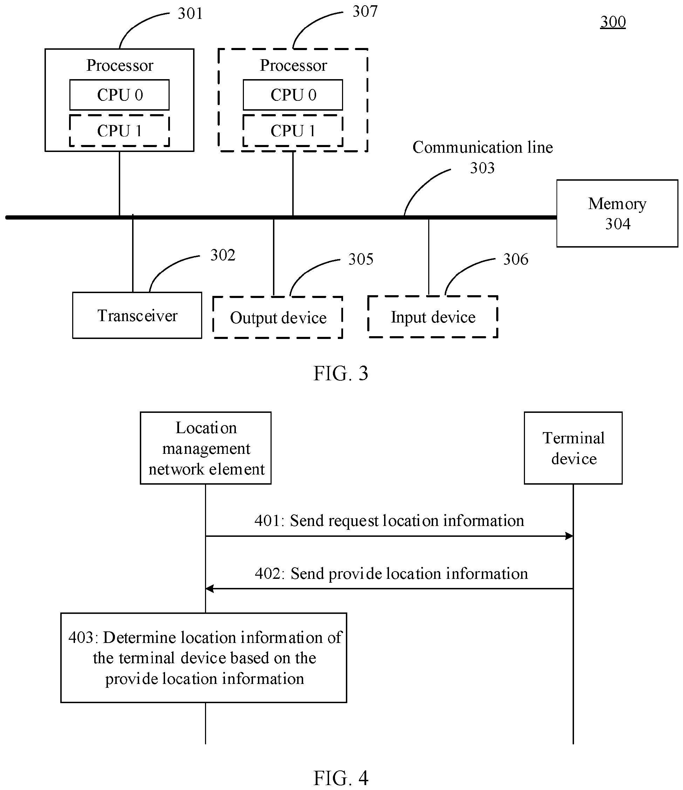

During specific implementation, as shown in FIG. 1, for example, each of the terminal device, the access network element, and the core network element may use a composition structure shown in FIG. 3, or include components shown in FIG. 3. FIG. 3 is a schematic diagram of composition of a communication apparatus 300 according to an embodiment of this application. The communication apparatus 300 may be a terminal device or a chip or a system-on-a-chip in the terminal device, may be an access network element or a chip or a system-on-a-chip in the access network element, or may be a core network element or a chip or a system-on-a-chip in the core network element. As shown in FIG. 3, the communication apparatus 300 includes a processor 301, a transceiver 302, and a communication line 303.

Further, the communication apparatus 300 may include a memory 304. The processor 301, the memory 304, and the transceiver 302 may be connected through the communication line 303.

The processor 301 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 301 may be another apparatus having a processing function, for example, a circuit, a component, or a software module. This is not limited.

The transceiver 302 is configured to communicate with another device or another communication network. The another communication network may be the Ethernet, a radio access network (radio access network, RAN), a wireless local area network (wireless local area network, WLAN), or the like. The transceiver 302 may be a module, a circuit, a transceiver, or any apparatus that can implement communication.

Optionally, the transceiver 302 may further include a receiver and a transmitter. The receiver may be configured to perform a receiving operation performed by the transceiver 302. The transmitter may be configured to perform a sending operation performed by the transceiver 302.

It should be noted that the transceiver 302 may alternatively be described as an input/output unit. The input/output unit may alternatively include an input unit and an output unit. The input unit may be configured to perform the receiving operation performed by the transceiver 302, and the output unit may be configured to perform the sending operation performed by the transceiver 302.

The communication line 303 is configured to transmit information between the components included in the communication apparatus 300.

The memory 304 is configured to store instructions. The instructions may be a computer program.

The memory 304 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium or another magnetic storage device, or the like. This is not limited.

It should be noted that the memory 304 may exist independently of the processor 301, or may be integrated with the processor 301. The memory 304 may be configured to store instructions, program code, some data, or the like. The memory 304 may be located inside the communication apparatus 300, or may be located outside the communication apparatus 300. This is not limited. The processor 301 is configured to execute the instructions stored in the memory 304, to implement the positioning information reporting method provided in the following embodiments of this application.

In an example, the processor 301 may include one or more CPUs, for example, a CPU 0 and a CPU 1 in FIG. 3.

In an optional implementation, the communication apparatus 300 includes a plurality of processors. For example, in addition to the processor 301 in FIG. 3, the communication apparatus 300 may further include a processor 307.

In an optional implementation, the communication apparatus 300 further includes an output device 305 and an input device 306. For example, the input device 306 is a device, for example, a keyboard, a mouse, a microphone, or a joystick, and the output device 305 is a device, for example, a display, or a speaker (speaker).

It should be noted that the communication apparatus 300 may be a desktop computer, a portable computer, a network server, a mobile phone, a tablet computer, a wireless terminal, an embedded device, a chip system, or a device having a structure similar to a structure in FIG. 3. In addition, the composition structure shown in FIG. 3 does not constitute a limitation on the communication apparatus. In addition to the components shown in FIG. 3, the communication apparatus may include more or fewer components than those shown in FIG. 3, or some components may be combined, or different component arrangements may be used.

In this embodiment of this application, the chip system may include a chip, or may include a chip and another discrete component.

In addition, for actions, terms, and the like in embodiments of this application, refer to each other. This is not limited. In embodiments of this application, names of messages exchanged between devices, names of parameters in the messages, or the like are merely examples. Other names may alternatively be used during specific implementation. This is not limited.

With reference to the communication system shown in FIG. 1 or FIG. 2a, the following describes the positioning information reporting method provided in embodiments of this application with reference to FIG. 4 to FIG. 14. A terminal device may be any terminal device in the communication system shown in FIG. 1 or FIG. 2a, an access network element may be any access network element in the communication system shown in FIG. 1 or FIG. 2a, an access and mobility management network element may be any access and mobility management network element in the communication system shown in FIG. 1 or FIG. 2a, and a location management network element may be any location management network element in the communication system shown in FIG. 1 or FIG. 2a. The terminal device, the access network element, the access and mobility management network element, and the location management network element in the following embodiments may all have the components shown in FIG. 3.

FIG. 4 is a flowchart of a positioning information reporting method according to an embodiment of this application. As shown in FIG. 4, the method may include the following steps.

401: A location management network element sends request location information to a terminal device.

The request location information may include angle assistance information, and the angle assistance information may indicate an angle between an access network element and the terminal device.

Optionally, the location management network element determines the angle between the access network element and the terminal device based on historical location information of the terminal device and location information of the access network element.

For example, the terminal device may obtain the historical location information of the terminal device based on a positioning unit of the terminal device, and report the historical location information to the location management network element.

The positioning unit may be a global positioning system (global positioning system, GPS) unit, a BeiDou navigation satellite system (BeiDou navigation satellite system, BDS) unit, or another unit that can be configured to implement positioning. This is not limited.

In another example, the location management network element may alternatively determine the historical location information of the terminal device by using a positioning technology, for example, an uplink positioning technology, a downlink positioning technology, or an uplink/downlink positioning technology. Details are not described again.

Based on the foregoing two examples, the location management network element may calculate the angle between the access network element and the terminal device based on the historical location information of the terminal device and prestored location information of the access network element according to a geometric relationship.

Optionally, the location management network element determines the angle between the access network element and the terminal device based on a global coordinate system (global coordinate system, GCS).

It should be noted that the angle between the access network element and the terminal device may also be described as a relative direction between the access network element and the terminal device.

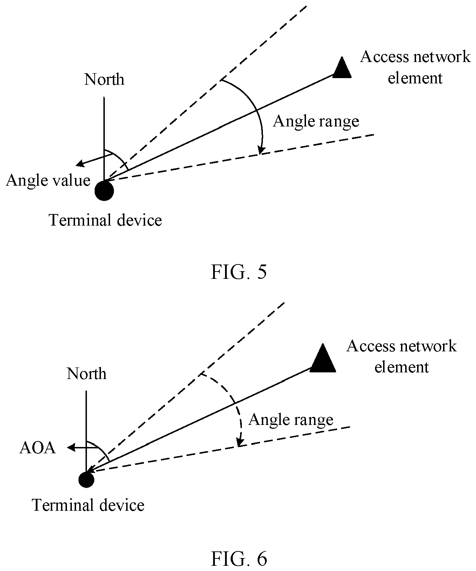

For example, as shown in FIG. 5, a due north direction is used as a reference direction, and the angle between the access network element and the terminal device may include an angle value and/or an angle range. The angle value may be a value of an included angle between the due north direction and a transmission direction of a ray that is sent by using the terminal device as an origin and passes through the access network element. The angle range may be a range of an included angle between the due north direction and a transmission direction of a ray that is sent by using the terminal device as an origin and that is close to the access network element.

Optionally, the location management network element determines the angle range between the access network element and the terminal device based on a cell range covered by the access network element.

It should be noted that, when the access network element and the terminal device are not at a same height, the location management network element may decompose the angle between the access network element and the terminal device into two planes.

In a possible design, for example, the location management network element decomposes the relative direction into a horizontal plane and a vertical plane, and the angle assistance information includes azimuth angle information and/or zenith angle information.

The azimuth angle information may indicate an included angle that is on the horizontal plane and between the access network element and the terminal device, and the azimuth angle information may alternatively be described as horizontal angle information. The zenith angle information may indicate an included angle between a zenith direction and a direction of the access network element relative to the terminal device, and the zenith angle information may alternatively be described as vertical angle information.

Optionally, for example, the due north direction is the reference direction, and the azimuth angle information indicates an included angle between the due north direction and the direction of the access network element relative to the terminal device.

For example, the azimuth angle information may include one or more of the following information: an azimuth angle value, an azimuth angle range, a first value, preset azimuth angle value information, and preset azimuth angle range information.

The azimuth angle range may be obtained by adding or subtracting the azimuth angle value and the first value, the preset azimuth angle value information may indicate the azimuth angle value, and the preset azimuth angle range information may indicate the azimuth angle range.

The first value may be pre-defined in a communication protocol, or may be pre-negotiated by the location management network element with the terminal device, or may be customized by the location management network element. This is not limited.

For example, a correspondence between the azimuth angle value and the preset azimuth angle value information is shown in Table 1. Assuming that the azimuth angle value determined by the location management network element is 90°, the location management network element may send 3 as the azimuth angle information to the terminal device.

**Table 1**

| Azimuth angle value | Preset azimuth angle value information |
|---|---|
| 0° | 0 |
| 30° | 1 |
| 60° | 2 |
| 90° | 3 |
| ... | ... |
| 330° | 11 |

The correspondence between the azimuth angle value and the preset azimuth angle value information may be pre-defined in a communication protocol, or may be pre-negotiated by the location management network element with the terminal device, or may be customized by the location management network element and sent to the terminal device. This is not limited.

For another example, a correspondence between the azimuth angle range and the preset azimuth angle range information is shown in Table 2. Assuming that the azimuth angle range determined by the location management network element is 0° to 90°, the location management network element may send 1 as the azimuth angle information to the terminal device.

**Table 2**

| Azimuth angle range | Preset azimuth angle range information |
|---|---|
| 0° to 90° | 1 |
| 90° to 180° | 2 |
| 180° to 270° | 3 |

(continued)

| Azimuth angle range | Preset azimuth angle range information |
|---|---|
| 270° to 360° | 4 |

The correspondence between the azimuth angle range and the preset azimuth angle range information may be pre-defined in a communication protocol, or may be pre-negotiated by the location management network element with the terminal device, or may be customized by the location management network element and sent to the terminal device. This is not limited.

Based on the foregoing example, the location management network element may indicate the azimuth angle value to the terminal device by sending the azimuth angle value or sending the preset azimuth angle value information, so that the terminal device performs signal measurement in a direction indicated by the azimuth angle value; or may indicate the azimuth angle range to the terminal device by sending the azimuth angle range, or sending the azimuth angle value and the first value, or sending the preset azimuth angle range information, so that the terminal device performs signal measurement in the azimuth angle range. This narrows down an angle search range of the terminal device, reduces processing complexity of the terminal device, improves computing efficiency, and saves computing time.

It should be noted that, when the azimuth angle information includes the azimuth angle value and the first value, the first value may be 0. In this case, the azimuth angle range is equal to a result obtained by adding or subtracting the azimuth angle value and zero, that is, the azimuth angle range is the azimuth angle value. Alternatively, the first value may be a non-zero value. In this case, the azimuth angle range may be equal to a result obtained by adding or subtracting the azimuth angle value and the first value.

When the azimuth angle value determined by the location management network element is inaccurate, the location management network element may set the first value to a non-zero value, so as to indicate the azimuth angle range to the terminal device by using the azimuth angle value and the first value. The terminal device may perform signal measurement within the azimuth angle range indicated by the location management network element, to obtain a measurement result. In this case, an angle corresponding to the measurement result is within the angle indicated by the angle assistance information. In other words, first indication information corresponding to the measurement result indicates that the angle corresponding to the measurement result is within the angle indicated by the angle assistance information.

When the azimuth angle value determined by the location management network element is accurate, the location management network element may set the first value to 0. The terminal device may consider, based on the received first value whose value is 0, that the received azimuth angle value is accurate, and then perform signal measurement in a direction indicated by the azimuth angle value, to obtain a measurement result. In this case, an angle corresponding to the measurement result is within the angle indicated by the angle assistance information. In other words, first indication information corresponding to the measurement result indicates that the angle corresponding to the measurement result is within the angle indicated by the angle assistance information. However, when the terminal device cannot obtain the measurement result in the direction indicated by the azimuth angle value, the terminal device may expand the angle range based on the azimuth angle value, and perform signal measurement in the expanded angle range to obtain a measurement result. In this case, an angle corresponding to the measurement result is outside the angle indicated by the angle assistance information. In other words, first indication information corresponding to the measurement result indicates that the angle corresponding to the measurement result is not within the angle indicated by the angle assistance information.

For example, the zenith angle information may include one or more of the following information: a zenith angle value, a zenith angle range, a second value, preset zenith angle value information, and preset zenith angle range information.

The zenith angle range may be obtained by adding or subtracting the zenith angle value and the second value, the preset zenith angle value information may indicate the zenith angle value, and the preset zenith angle range information may indicate the zenith angle range.

It should be noted that the second value may be pre-defined in a communication protocol, or may be pre-negotiated by the location management network element with the terminal device, or may be customized by the location management network element. This is not limited.

For example, a correspondence between the zenith angle value and the preset zenith angle value information is shown in Table 3. Assuming that the zenith angle value determined by the location management network element is 45°, the location management network element may send 3 as the zenith angle information to the terminal device.

**Table 3**

| Zenith angle value | Preset zenith angle value information |
|---|---|
| 0° | 0 |
| 15° | 1 |
| 30° | 2 |
| 45° | 3 |
| ... | ... |
| 165° | 11 |

The correspondence between the zenith angle value and the preset zenith angle value information may be pre-defined in a communication protocol, or may be pre-negotiated by the location management network element with the terminal device, or may be customized by the location management network element and sent to the terminal device. This is not limited.

For another example, a correspondence between the zenith angle range and the preset zenith angle range information is shown in Table 4. Assuming that the zenith angle range determined by the location management network element is 0° to 45°, the location management network element may send 1 as the zenith angle information to the terminal device.

**Table 4**

| Zenith angle range | Preset zenith angle range information |
|---|---|
| 0° to 45° | 1 |
| 45° to 90° | 2 |
| 90° to 135° | 3 |
| 135° to 180° | 4 |

The correspondence between the zenith angle range and the preset zenith angle range information may be pre-defined in a communication protocol, or may be pre-negotiated by the location management network element with the terminal device, or may be customized by the location management network element and sent to the terminal device. This is not limited.

Based on the foregoing example, the location management network element may indicate the zenith angle value to the terminal device by sending the zenith angle value or sending the preset zenith angle value information, so that the terminal device performs signal measurement in a direction indicated by the zenith angle value; or may indicate the zenith angle range to the terminal device by sending the zenith angle range, or sending the zenith angle value and the second value, or sending the preset zenith angle range information, so that the terminal device performs signal measurement in the zenith angle range. This narrows down an angle search range of the terminal device, reduces processing complexity of the terminal device, improves computing efficiency, and saves computing time.

It should be noted that, when the zenith angle information includes the zenith angle value and the second value, the second value may be 0. In this case, the zenith angle range is equal to a result obtained by adding or subtracting the zenith angle value and zero, that is, the zenith angle range is the zenith angle value. Alternatively, the second value may be a non-zero value. In this case, the zenith angle range may be equal to a result obtained by adding or subtracting the zenith angle value and the second value.

When the zenith angle value determined by the location management network element is inaccurate, the location management network element may set the second value to a non-zero value, so as to indicate the zenith angle range to the terminal device by using the zenith angle value and the second value. The terminal device may perform signal measurement within the zenith angle range indicated by the location management network element, to obtain a measurement result. In this case, an angle corresponding to the measurement result is within the angle indicated by the angle assistance information. In other words, first indication information corresponding to the measurement result indicates that the angle corresponding to the measurement result is within the angle indicated by the angle assistance information.

When the zenith angle value determined by the location management network element is accurate, the location management network element may set the second value to 0. The terminal device may consider, based on the received second value whose value is 0, that the received zenith angle value is accurate, and then perform signal measurement in a direction indicated by the zenith angle value, to obtain a measurement result. In this case, an angle corresponding to the measurement result is within the angle indicated by the angle assistance information. In other words, first indication information corresponding to the measurement result indicates that the angle corresponding to the measurement result is within the angle indicated by the angle assistance information. However, when the terminal device cannot obtain the measurement result in the direction indicated by the zenith angle value, the terminal device may expand the angle range based on the zenith angle value, and perform signal measurement in the expanded angle range to obtain a measurement result. In this case, an angle corresponding to the measurement result is outside the angle indicated by the angle assistance information. In other words, first indication information corresponding to the measurement result indicates that the angle corresponding to the measurement result is not within the angle indicated by the angle assistance information.

Optionally, the request location information further includes one or more of the following information: identification information of the access network element, first path type information, path quantity information, granularity information, and a reporting type.

The first path type information may indicate a type of a path corresponding to a signal that is of the access network element and that is measured by the terminal device. When the path quantity information indicates that a path quantity is N, a measurement result of measuring the signal of the access network element by the terminal device may correspond to N paths. $N \geq 1$. The granularity information may indicate a granularity of the measurement result or a resolution of the measurement result. The reporting type may be periodic reporting or aperiodic reporting. When the reporting type is periodic reporting, the request location information may further include a reporting periodicity and/or a quantity of reporting times.

For example, the identification information of the access network element may be an identifier (identifier, ID), a transmission reception point (Transmit receive point, TRP) identifier (ID), a positioning reference signal table (Positioning reference signal, PRS) identifier (ID), a physical cell identifier (physical cell identifier, PCI), a cell global identifier (cell global identifier, CGI), or another identifier that may identify identity information of the access network element. This is not limited.

For example, a type of a path may include one or more of the following: a first path, a strongest path, a reflection path, and a $K^{th}$ path.

The first path may be a path corresponding to a signal that arrives first. The strongest path may be a path corresponding to a signal with the strongest signal strength. The reflection path may be a path corresponding to a signal on which reflection transmission is performed. The $K^{th}$ path indicates a $K^{th}$ arriving path detected by the terminal device in time, K is an integer, and $K > 1$.

Peak detection may be performed based on a channel impulse response (Channel impulse response, CIR) generated by channel data. Signal strength may be determined based on a peak. When there are a plurality of peaks, each peak corresponds to one path. The signal strength may also be determined based on parameters that can measure signal strength, for example, RSRP, and reference signal received quality (reference signal received quality, RSRQ).

When the measurement result is an angle, the granularity information may alternatively be described as an angle resolution. When the measurement result is a latency, the granularity information may alternatively be described as a latency resolution. When the measurement result is RSRP, the granularity information may alternatively be described as an RSRP resolution, and the like. This is not limited.

When the reporting type is aperiodic reporting, it indicates that the terminal device may perform measurement only once, and a task ends after the measurement result is reported.

When the reporting type is periodic reporting, the reporting periodicity may indicate a periodicity in which the terminal device performs signal measurement. After performing signal measurement, the terminal device reports the measurement result to the location management network element. The quantity of reporting times may indicate a quantity of times that the measurement periodicity lasts. When the quantity of times reaches, the terminal device stops performing signal measurement.

Optionally, when the reporting type is periodic reporting, the request location information may further include measurement duration.

The terminal device may periodically perform signal measurement based on the measurement reporting periodicity, and stop performing signal measurement when the measurement duration expires.

For example, when performing signal measurement for the first time, the terminal device may start a timer whose working duration is the measurement duration, and stop performing signal measurement after the timer expires.

Optionally, the request location information is long term evolution positioning protocol (LTE positioning protocol, LPP) request location information (request location information).

It should be noted that, in this embodiment of this application, the location management network element may send the request location information to the terminal device by using the access and mobility management network element and the access network element.

In addition, in 401, the request location information may also include angle assistance information corresponding to a plurality of access network elements.

For example, the request location information includes X pieces of angle assistance information corresponding to X access network elements. An i$^{th}$ piece of angle assistance information may indicate an angle between an i$^{th}$ access network element and the terminal device. X is greater than or equal to 1, and $1 \leq i \leq X$.

For a description of angle assistance information corresponding to each access network element, refer to the foregoing description of the angle assistance information. Details are not described again.

Optionally, the request location information further includes one or more of the following information: identification information of the X access network elements, X pieces of first path type information, X pieces of path quantity information, granularity information, and a reporting type.

An i$^{th}$ piece of first path type information may indicate a type of a path corresponding to a signal that is of an i$^{th}$ access network element and that is measured by the terminal device. When an i$^{th}$ piece of path quantity information indicates that a path quantity is N, a measurement result of measuring the signal of the i$^{th}$ access network element by the terminal device corresponds to N paths. $N \geq 1$.

Based on the foregoing description of the angle assistance information, because the terminal device may continuously be in a moving state, and a posture and an orientation may change at any time, the terminal device may determine, based on the angle assistance information, whether the historical location information that is of the terminal device and that is calculated by the location management network element is accurate and valid, or determine whether the historical location information determined by the positioning unit of the terminal device is incorrect.

For example, if the positioning unit of the terminal device determines that the terminal device does not move in a period of time, but the angle assistance information received by the terminal device changes, the terminal device may determine that the historical location information that is of the terminal device and that is calculated by the location management network element is incorrect, or determine that the positioning unit of the terminal device is faulty.

In still another example, the positioning unit of the terminal device may determine a movement direction of the terminal device, and the terminal device may predict a next change of angle assistance information with reference to newly received angle assistance information. When the received angle assistance information does not meet expectations, the terminal device may determine that the historical location information that is of the terminal device and that is calculated by the location management network element is incorrect, or determine that the positioning unit of the terminal device is faulty.

402: The terminal device sends provide location information to the location management network element.

The provide location information may include the measurement result and the first indication information corresponding to the measurement result. The measurement result may be a result of measuring, by the terminal device based on the angle assistance information, the signal sent by the access network element. The first indication information may indicate whether the angle corresponding to the measurement result is within the angle indicated by the angle assistance information.

After the terminal device obtains the angle assistance information, because the angle assistance information corresponds to a GCS coordinate system, the terminal device converts the angle assistance information into an angle in a local coordinate system (local coordinate system, LCS). The coordinate system may be converted based on a parameter preset by the terminal, or may be measured by using inertial navigation or a gyroscope unit of the terminal device. Signal measurement is performed based on the LCS coordinate system to obtain the measurement result.

In a possible design, the measurement result includes one or more of the following: an angle of arrival (angle of arrival, AOA), a reference signal time difference (reference signal time difference, RSTD), RSRP, or RTT.

For example, the terminal device may measure, by using a DL-AOA positioning technology, a downlink signal sent by the access network element, and determine the angle of arrival based on a phase difference or a time difference between a plurality of antenna array elements of a receive antenna of the terminal device.

The angle of arrival may be an angle at which the signal sent by the access network element reaches the terminal device.

For example, as shown in FIG. 6, the due north direction is the reference direction, the included angle between the due north direction and a transmission direction of a ray that is sent by using the terminal device as an origin and passes through the access network element may be determined as the angle of arrival AOA.

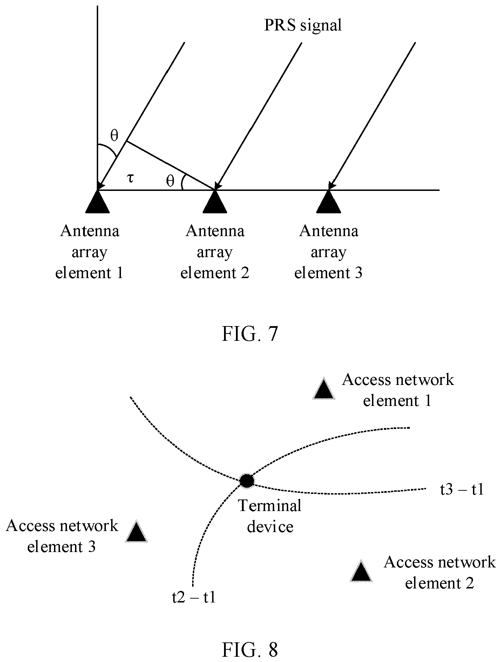

For example, as shown in FIG. 7, the terminal device may obtain, through measurement, a time difference of time at which a PRS signal sent by the access network element reaches each antenna array element of the terminal device, and determine the angle of arrival by using the following formula:

$$\tau = \frac{d \sin \theta}{c},$$

where

$\tau$ indicates the time difference of time at which the PRS signal reaches each antenna array element of the terminal device; d indicates a spacing between antenna array elements; c indicates the speed of light; and $\theta$ indicates the angle of arrival.

For another example, as shown in FIG. 7, the terminal device may obtain, through measurement, a phase difference of the PRS signal sent by the access network element reaching each antenna array element of the terminal device, and determine the angle of arrival by using the following formula:

$$\psi = 2\pi \frac{dsin\theta}{\lambda},$$

where

$\psi$ indicates the phase difference of the PRS signal reaching each antenna array element of the terminal device; d indicates a spacing between antenna array elements; $\lambda$ indicates a wavelength; and $\theta$ indicates the angle of arrival.

It should be noted that, when the access network element and the terminal device are not at a same height, or when three-dimensional positioning needs to be performed on the terminal device, the terminal device may decompose the angle of arrival into two planes.

For example, the terminal device decomposes the angle of arrival into a horizontal plane and a vertical plane. The angle of arrival may include a first azimuth angle value and a first zenith angle value.

The first azimuth angle value may be an included angle that is measured by the terminal device and that is on the horizontal plane and between the access network element and the terminal device, and the first zenith angle value may be an included angle that is measured by the terminal device and that is between the zenith direction and the direction of the access network element relative to the terminal device.

Optionally, for example, the due north direction is the reference direction, and the first azimuth angle value may be an included angle that is measured by the terminal device and that is between the due north direction and the direction of the access network element relative to the terminal device.

In still another example, the terminal device may measure, by using a DL-TDOA positioning technology, a downlink signal sent by the access network element, to obtain a reference signal time difference (reference signal time difference, RSTD).

For example, the RSTD may be a difference between a first moment and a second moment. The first moment is a moment at which the signal sent by the access network element reaches the terminal device, and the second moment is a moment at which a signal sent by a reference access network element reaches the terminal device.

For example, as shown in FIG. 8, the access network element includes an access network element 1, an access network element 2, and an access network element 3. Assuming that the terminal device uses the access network element 1 as the reference access network element, the terminal device may determine a moment t2 at which a signal sent by the access network element 2 reaches the terminal device as the first moment, use a moment t1 at which a signal sent by the access network element 1 reaches the terminal device as the second moment, and use t2 - t1 as a measurement result RSTD corresponding to the access network element 2. Similarly, the terminal device may determine a moment t3 at which a signal sent by the access network element 3 reaches the terminal device as the first moment, use a moment t1 at which a signal sent by the access network element 1 reaches the terminal device as the second moment, and use t3 - t1 as a measurement result RSTD corresponding to the access network element 3.

It should be noted that a distance difference corresponding to each time difference may form a hyperbola that focuses on two access network elements corresponding to the time difference.

In still another example, the terminal device may measure, by using a DL-AOD positioning technology, a downlink signal sent by the access network element, to obtain RSRP.

The RSRP may be beam-level RSRP.

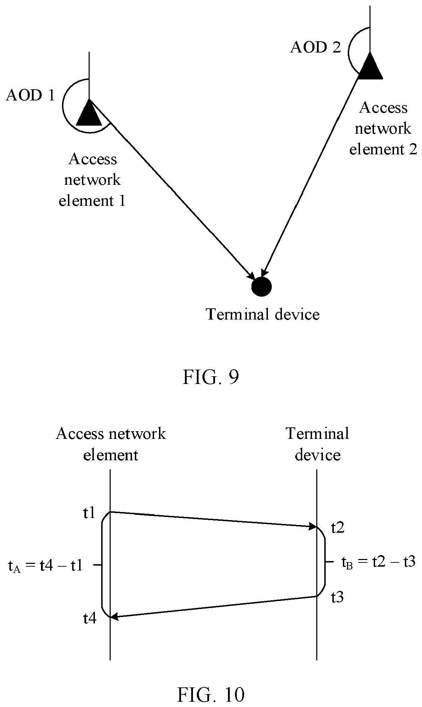

For example, as shown in FIG. 9, the terminal device may measure a PRS signal sent by the access network element, to obtain beam-level RSRP corresponding to each access network element.

In still another example, the terminal device may obtain, through measurement by using a Multi-RTT positioning technology, round trip time RTT between the access network element and the terminal device.

For example, as shown in FIG. 10, the access network element sends a downlink signal to the terminal device at a moment 11, the terminal device receives the downlink signal at a moment t2, the terminal device sends an uplink signal to the access network element at a moment t3, and the access network element receives the uplink signal at a moment t4. The terminal device may determine, based on sending time and arrival time of the downlink signal and sending time and arrival time of the uplink signal, t2 - t1 + t4 - t3 as the round trip time RTT between the access network element and the terminal device.

Alternatively, the terminal device sends a time difference $t_B$ = t2 - t3 between the arrival time of the downlink signal and the sending time of the uplink signal to the location management network element. The access network element sends a time difference $t_A$ = t4 - t1 between the arrival time of the uplink signal and the sending time of the downlink signal to the location management network element, so that the location management network element determines $t_A + t_B$ as the round trip time RTT between the access network element and the terminal device.

Based on the foregoing four examples, when the measurement result includes the angle of arrival, the first indication information may indicate whether the angle of arrival is within the angle indicated by the angle assistance information. When the measurement result includes the RSTD, the first indication information may indicate whether a measurement angle at which the terminal device obtains the RSTD through measurement is within the angle indicated by the angle assistance information. When the measurement result includes the RSRP, the first indication information may indicate whether a measurement angle at which the terminal device obtains the RSRP through measurement is within the angle indicated by the angle assistance information. When the measurement result includes the RTT, the first indication information may indicate whether a measurement angle at which the terminal device obtains the RTT through measurement is within the angle indicated by the angle assistance information.

Optionally, the provide location information further includes one or more of the following information: second indication information, and second path type information.

The second indication information may indicate an angular coordinate system corresponding to the measurement result, and the second path type information may indicate a type of a path corresponding to the measurement result.

For example, the angular coordinate system corresponding to the measurement result may be an LCS, or may be a GCS. This is not limited.

For example, a type of a path may include one or more of the following: a first path, a strongest path, a reflection path, and a $K^{th}$ path.

Optionally, the provide location information is LPP provide location information (provide location information).

Further, before sending the provide location information to the location management network element, the terminal device may further perform, based on the request location information, beamforming at the angle indicated by the angle assistance information, to enhance energy of a path in a direction of the angle indicated by the angle assistance information, weaken energy of another reflection path, and improve accuracy of an angle, a latency, or RSRP of a signal obtained by the terminal device through measurement, so as to improve accuracy of location information of the terminal device determined by the location management network element, and improve positioning precision. Beamforming may also be described as spatial filtering.

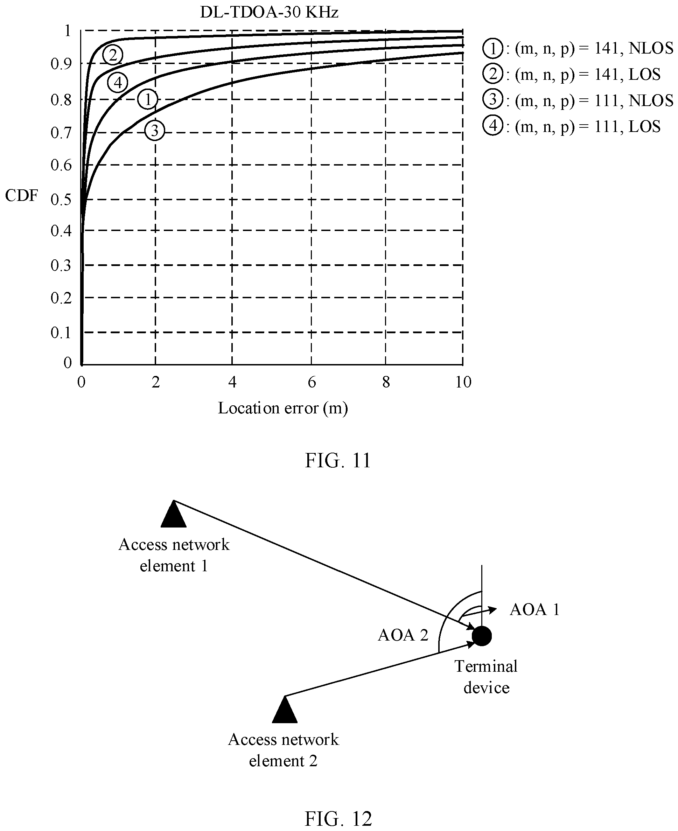

For example, as shown in FIG. 11, the DL-TDOA positioning technology is used as an example. 141 indicates that the terminal device performs spatial filtering, 111 indicates that the terminal device does not perform spatial filtering, LOS indicates that a measurement result corresponding to a LOS path is selected from a measurement result to perform positioning calculation, and an NLOS path indicates that the measurement result is not selected. It can be learned from FIG. 11 that, positioning precision of ② can reach 0.3 m at 90%, positioning precision of ④ can reach 1.4 m at 90%, and the positioning precision of ② is higher than the positioning precision of ④. That is, positioning calculation is performed by using the measurement result corresponding to the LOS path, so that the positioning precision can be improved.

It should be noted that, in this embodiment of this application, the terminal device may send the provide location information to the location management network element by using the access network element and the access and mobility management network element.

It should be noted that, usually, a quantity of antennas of the terminal device is limited, and antenna deployment is limited. Therefore, a beamforming capability of the terminal device is limited. The angle assistance information received by the terminal device can help the terminal device provide more accurate evaluation on the measurement result.

For example, because the terminal device may continuously be in a moving state, and a posture and an orientation may change at any time, the terminal device having a beamforming capability may not be able to perform ideal spatial filtering at an angle indicated by the angle assistance information due to a limitation of the terminal posture and an antenna. The measurement result may be affected by multipath, resulting in a large error. In this case, the terminal device may determine that ideal spatial filtering is not currently performed, quantize a non-ideal degree, and report the non-ideal degree to the location management network element by using a parameter, for example, measurement quality. When performing location calculation, the location management network element may consider not using a measurement result that does not implement ideal spatial filtering for positioning, to improve positioning precision.

In addition, when the request location information includes angle assistance information corresponding to a plurality of access network elements, the provide location information may include measurement results corresponding to the plurality of access network elements.

For example, the request location information includes X pieces of angle assistance information corresponding to X access network elements. The provide location information may include X measurement results corresponding to the X access network elements. An $i^{th}$ measurement result is a result of measuring, by the terminal device based on an $i^{th}$ piece of angle assistance information, a signal sent by an $i^{th}$ access network element. X is greater than or equal to

1, and $1 \leq i \leq X$.

For a description of a measurement result corresponding to each access network element, refer to the foregoing description of the measurement result. Details are not described again.

Optionally, the provide location information further includes one or more of the following information: second indication information, and X pieces of second path type information.

An $i^{th}$ piece of second path type information indicates a type of a path corresponding to the $i^{th}$ measurement result.

Optionally, compared with that the terminal device carries, in the provide location information, the measurement result and the first indication information corresponding to the measurement result, and sends the provide location information to the location management network element, the terminal device may alternatively carry the first indication information in the measurement result corresponding to the first indication information, and send the measurement result to the location management network element by using the provide location information; or may carry the measurement result in the provide location information and send the provide location information to the location management network element, and send, to the location management network element by using other signaling, the first indication information corresponding to the measurement result. This is not limited.

Compared with that the terminal device sends the first indication information to the location management network element, the terminal device may alternatively select a measurement result when sending the measurement result to the location management network element. That is, the terminal device sends, to the location management network element, a measurement result whose corresponding angle is within the angle indicated by the angle assistance information, so that the location management network element can directly determine the location information of the terminal device based on the received measurement result, to improve positioning precision and reduce signaling overheads.

For example, the terminal device may send, to the location management network element, provide location information including Y measurement results. A $j^{th}$ measurement result is a result of measuring, by the terminal device based on a $j^{th}$ piece of angle assistance information, a signal sent by a $j^{th}$ access network element, and an angle corresponding to the $j^{th}$ measurement result is within an angle indicated by the $j^{th}$ piece of angle assistance information. $Y \leq X$; and $1 \leq j \leq Y$.

Compared with that the terminal device sends, to the location management network element, the X measurement results and the X pieces of first indication information corresponding to the X measurement results, the terminal device may alternatively select a measurement result when sending the measurement result to the location management network element. That is, the terminal device sends, to the location management network element, the Y measurement results whose corresponding angles are within the angle indicated by the angle assistance information, so that the location management network element can directly determine the location information of the terminal device based on the received Y measurement results, to improve positioning precision and reduce signaling overheads.

403: The location management network element determines the location information of the terminal device based on the provide location information.

When the first indication information corresponding to the measurement result indicates that the angle corresponding to the measurement result is within the angle indicated by the angle assistance information, the location management network element may determine the location information of the terminal device based on the measurement result.

For example, when the measurement result includes the angle of arrival, the location management network element may send, to the terminal device, angle assistance information corresponding to at least two access network elements, to obtain angles of arrival that correspond to the at least two access network elements and that are measured by the terminal device, and determine the location information of the terminal device based on the angles of arrival.

For example, as shown in FIG. 12, the location management network element sends, to the terminal device, angle assistance information corresponding to an access network element 1 and angle assistance information corresponding to an access network element 2. The location management network element may receive a measurement result AOA 1 corresponding to the access network element 1 and a measurement result AOA 2 corresponding to the access network element 2 that are sent by the terminal device, and determine an intersection point of a straight line corresponding to the AOA 1 and a straight line corresponding to the AOA 2 as the location information of the terminal device. The due north direction is used as the reference direction, the straight line corresponding to the AOA 1 may be a straight line that has an included angle AOA 1 with the due north direction and passes through the access network element 1, and the straight line corresponding to the AOA 2 may be a straight line that has an included angle AOA 2 with the due north direction and passes through the access network element 2.

In still another example, when the measurement result includes the RSTD, the location management network element may send, to the terminal device, angle assistance information corresponding to at least three access network elements, so that the terminal device uses one of the at least three access network elements as the reference access network element, and obtains an RSTD between another access network element and the reference access network element.

For example, as shown in FIG. 8, the location management network element sends, to the terminal device, the angle assistance information corresponding to the access network element 1, the angle assistance information corresponding to the access network element 2, and the angle assistance information corresponding to the access network element 3. Assuming that the terminal device determines the access network element 1 as the reference access network element, the location management network element may receive an RSTD 1 corresponding to the access network element 2 and an RSTD 2 corresponding to the access network element 3 that are sent by the terminal device, determine a hyperbola 1 based on the RSTD 1, determine a hyperbola 2 based on the RSTD 2, and determine an intersection point of the hyperbola 1 and the hyperbola 2 as the location information of the terminal device.

The terminal device may determine the moment t2 at which the signal sent by the access network element 2 reaches the terminal device as the first moment, use the moment t1 at which the signal sent by the access network element 1 reaches the terminal device as the second moment, and use t2 - t1 as a measurement result RSTD 1 corresponding to the access network element 2. Similarly, the terminal device may determine the moment t3 at which the signal sent by the access network element 3 reaches the terminal device as the first moment, use the moment t1 at which the signal sent by the access network element 1 reaches the terminal device as the second moment, and use t3 - t1 as a measurement result RSTD 2 corresponding to the access network element 3.

The location management network element may determine, based on a distance difference corresponding to the RSTD 1, the hyperbola 1 with the access network element 1 and the access network element 2 as a focus, and determine, based on a distance difference corresponding to the RSTD 2, the hyperbola with the access network element 1 and the access network element 3 as a focus.

In still another example, when the measurement result includes the RSRP, the RSRP may be a set of beam-level RSRP, that is, each beam has one piece of RSRP, and the location management network element may send, to the terminal device, angle assistance information corresponding to at least two access network elements, so as to obtain RSRP that corresponds to the at least two access network elements and that is sent by the terminal device, and determine the location information of the terminal device based on the RSRP and a transmit beam pattern of each base station.

For example, as shown in FIG. 9, the location management network element sends, to the terminal device, the angle assistance information corresponding to the access network element 1 and the angle assistance information corresponding to the access network element 2. The location management network element may receive a group of beam-level RSRP corresponding to the access network element 1 and a group of beam-level RSRP corresponding to the access network element 2 that are sent by the terminal device. The location management network element may determine, based on the group of beam-level RSRP corresponding to the access network element 1 and a transmit beam pattern of the access network element 1, an angle of departure 1 corresponding to the access network element 1; determine, based on the group of beam-level RSRP corresponding to the access network element 2 and a transmit beam pattern of the access network element 2, an angle of departure 2 corresponding to the access network element 2; and determine, based on the angle of departure 1, the angle of departure 2, location information of the access network element 1, and location information of the access network element 2 and by using the due north direction as the reference direction, that an intersection point of a ray 1 with the access network element 1 as an origin and the angle of departure 1 as a deflection angle and a ray 2 with the access network element 2 as an origin and the angle of departure 2 as a deflection angle is the location information of the terminal device.

The transmit beam pattern of each access network element may be prestored in the location management network element.

Alternatively, the location management network element may send, to the access network element 1, the group of beam-level RSRP corresponding to the access network element 1, so that the access network element 1 determines, based on the group of beam-level RSRP and the transmit beam pattern of the access network element 1, the angle of departure 1 corresponding to the access network element 1, and reports the angle of departure 1 to the location management network element. The location management network element may also send, to the access network element 2, the group of beam-level RSRP corresponding to the access network element 2, so that the access network element 2 determines, based on the group of beam-level RSRP and the transmit beam pattern of the access network element 2, the angle of departure 2 corresponding to the access network element 2, and reports the angle of departure 2 to the location management network element. The location management network element determines, based on the angle of departure 1, the angle of departure 2, the location information of the access network element 1, and the location information of the access network element 2 and by using the due north direction as the reference direction, that the intersection point of the ray 1 with the access network element 1 as an origin and the angle of departure 1 as a deflection angle and the ray 2 with the access network element 2 as an origin and the angle of departure 2 as a deflection angle is the location information of the terminal device.

In still another example, when the measurement result includes the RTT, the location management network element may send, to the terminal device, angle assistance information corresponding to at least two access network elements, to obtain RTT that corresponds to the at least two access network elements and that is sent by the terminal device, and determine the location information of the terminal device based on the RTT.

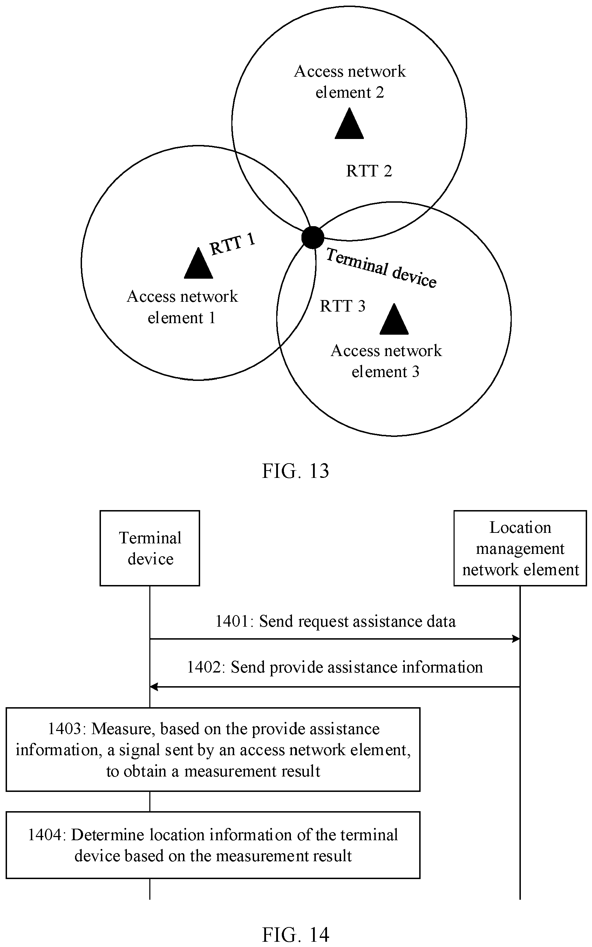

For example, as shown in FIG. 13, the location management network element sends, to the terminal device, angle assistance information corresponding to an access network element 1, angle assistance information corresponding to an access network element 2, and angle assistance information corresponding to an access network element 3. The location management network element may receive RTT 1 corresponding to the access network element 1, RTT 2 corresponding to the access network element 2, and RTT 3 corresponding to the access network element 3 that are sent by the terminal device; draw a circle with a location of the access network element 1 as a center and the RTT 1 as a radius, draw a circle with a location of the access network element 2 as a center and the RTT 2 as a radius, and draw a circle with a location of the access network element 3 as a center and the RTT 3 as a radius; and determine an intersection point of the three circles as the location information of the terminal device.

Alternatively, the location management network element may receive a time difference $t_{B1}$ obtained through measurement by the access network element 1, a time difference $t_{B2}$ obtained through measurement by the access network element 2, and a time difference $t_{B3}$ obtained through measurement by the access network element 3 that are sent by the terminal device, receive a time difference $t_{A1}$ sent by the access network element 1, a time difference $t_{A2}$ sent by the access network element 2, and a time difference $t_{A3}$ sent by the access network element 3, determine $t_{A1}$ + $t_{B1}$ as the RTT 1 corresponding to the access network element 1, determine $t_{A2}$ + $t_{B2}$ as the RTT 2 corresponding to the access network element 2, and determine $t_{A3}$ + $t_{B3}$ as the RTT 3 corresponding to the access network element 3.

Based on the foregoing example, after receiving the measurement result sent by the terminal device, the location management network element may determine, based on the first indication information of the measurement result, whether the angle corresponding to the measurement result is within the angle indicated by the angle assistance information. If the angle corresponding to the measurement result is not within the angle indicated by the angle assistance information, it may indicate that the measurement result does not meet the prediction of the location management network element, and the measurement result is likely from the NLOS path. If the angle corresponding to the measurement result is within the angle indicated by the angle assistance information, it may indicate that the measurement result meets the prediction of the location management network element, and the measurement result is likely from the LOS path. The location management network element determines the location information of the terminal device based on the measurement result corresponding to the LOS path, so that positioning precision can be improved.

Based on embodiments shown in FIG. 4 to FIG. 13, the terminal device may measure or preferably measure, in the angle indicated by the angle assistance information, the signal sent by the access network element, to narrow down an angle search range, reduce a measurement error of measuring, by the terminal device, the signal sent by the access network element, reduce processing complexity of the terminal device, improve computing efficiency, and save computing time. In addition, when reporting the measurement result to the location management network element, the terminal device may further carry the first indication information indicating whether an angle corresponding to the measurement result is within the angle indicated by the angle assistance information, so that the location management network element determines, based on the first indication information, whether the measurement result corresponds to the LOS path or the NLOS path, and further determines the location information of the terminal device based on the measurement result corresponding to the LOS path, to reduce an error of the location information that is of the terminal device and that is determined by the location management network element based on the measurement result of the terminal device, and improve positioning precision.

Corresponding to that the location management network element determines the location information of the terminal device based on the measurement result, as shown in FIG. 14, the terminal device may also determine the location information of the terminal device based on the measurement result.

FIG. 14 is a flowchart of a positioning information reporting method according to an embodiment of this application. As shown in FIG. 14, the method may include the following steps.

1401: A terminal device sends request assistance data to a location management network element.

The request assistance data may be LPP request assistance data.

1402: The location management network element sends provide assistance information to the terminal device.

The provide assistance information may include angle assistance information, and the angle assistance information may indicate an angle between an access network element and the terminal device.

Optionally, the provide assistance information further includes one or more of the following information: identification information of the access network element, first path type information, and path quantity information.

It should be noted that for descriptions of the angle assistance information, the identification information of the access network element, the first path type information, the path quantity information, granularity information, and a reporting type in this embodiment of this application, refer to specific descriptions of the angle assistance information, the identification information of the access network element, the first path type information, the path quantity information, the granularity information, and the reporting type in FIG. 4. Details are not described again.

The provide assistance information may be LPP provide assistance information.

1403: The terminal device measures, based on the provide assistance information, a signal sent by the access network element, to obtain a measurement result.

It should be noted that for a specific description of the measurement result in this embodiment of this application, refer to the specific description of the measurement result in FIG. 4. Details are not described again.

1404: The terminal device determines location information of the terminal device based on the measurement result.

It should be noted that, in step 1404, the terminal device may determine the location information of the terminal device with reference to a manner in which the location management network element determines the location information of the terminal device based on the measurement result in FIG. 4. Details are not described herein again.

Further, the terminal device may send the location information determined by the terminal device to the location management network element.

Based on this embodiment shown in FIG. 14, the terminal device may measure or preferably measure, in the angle indicated by the angle assistance information, the signal sent by the access network element, to narrow down an angle search range, reduce a measurement error of measuring, by the terminal device, the signal sent by the access network element, reduce processing complexity of the terminal device, improve computing efficiency, and save computing time. In addition, when measuring the signal sent by the access network element, the terminal device may further determine first indication information indicating whether an angle corresponding to the measurement result is within the angle indicated by the angle assistance information, so that the terminal device determines, based on the first indication information, whether the measurement result corresponds to a LOS path or an NLOS path, and further determines the location information of the terminal device based on a measurement result corresponding to the LOS path, to reduce an error of the location information that is of the terminal device and that is determined based on the measurement result of the terminal device, and improve positioning precision.

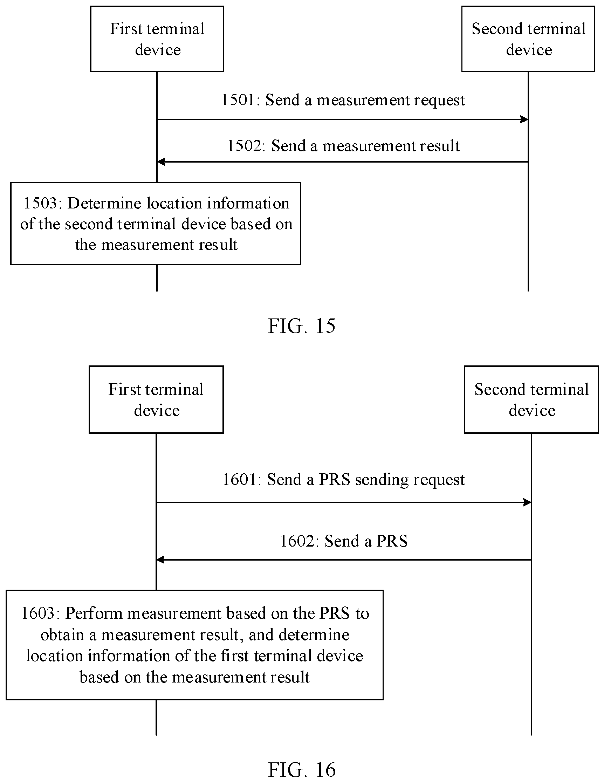

Similar to that in FIG. 4 to FIG. 14, the terminal device measures, based on the angle assistance information indicating the angle between the access network element and the terminal device, the signal sent by the access network element to obtain the measurement result, and the location management network element or the terminal device may determine the location information of the terminal device based on the measurement result, as shown in FIG. 15, in a sidelink communication scenario, a second terminal device may measure, based on angle assistance information indicating an angle between a first terminal device and the second terminal device, a signal sent by the first terminal device, and the first terminal device determines location information of the second terminal device based on a measurement result.

FIG. 15 is a flowchart of a positioning information reporting method according to an embodiment of this application. As shown in FIG. 15, the method may include the following steps.

1501: A first terminal device sends a measurement request to a second terminal device.

The measurement request may be used to request the second terminal device to measure a PRS. The measurement request may include PRS configuration information and angle assistance information.

The angle assistance information may indicate an angle between the first terminal device and the second terminal device.

Optionally, the first terminal device determines the angle between the first terminal device and the second terminal device based on location information of the first terminal device and historical location information of the second terminal device.

The historical location information of the second terminal device may be a specific historical location, or may be a location or a direction of the second terminal device relative to the first terminal device. This is not limited.

For example, the second terminal device may obtain the historical location information of the second terminal device based on a positioning unit of the second terminal device, and send the historical location information to the first terminal device.

In another example, the first terminal device may alternatively determine the historical location information of the second terminal device by using a positioning technology, for example, an uplink positioning technology, a downlink positioning technology, or an uplink/downlink positioning technology. Details are not described again.

For a description of determining the angle assistance information (indicating the angle between the first terminal device and the second terminal device) by the first terminal device, refer to the related description of determining the angle assistance information (indicating the angle between the access network element and the terminal device) by the location management network element in FIG. 4. Details are not described again.

Optionally, before the first terminal device sends the measurement request to the second terminal device, the first terminal device may obtain a PRS resource, and send the PRS to the second terminal device based on the obtained PRS resource.

The PRS resource may be a preconfigured or allocated resource used for sidelink transmission, or may be a resource that is selected by the first terminal device from a configured or preconfigured resource pool and used for sidelink transmission.

Optionally, the measurement request further includes one or more of the following information: identification information of the first terminal device, first path type information, path quantity information, granularity information, and a reporting type.

In a sidelink communication scenario, the first path type information may indicate a type of a path corresponding to a signal that is of the first terminal device and that is measured by the second terminal device. When the path quantity information indicates that a path quantity is N, a measurement result of measuring the signal of the first terminal device by the second terminal device may correspond to N paths. N ≥ 1. The granularity information may indicate a granularity of the measurement result or a resolution of the measurement result. The reporting type may be periodic reporting or aperiodic reporting. When the reporting type is periodic reporting, the measurement request may further include a reporting periodicity and/or a quantity of reporting times.

It should be noted that for descriptions of the identification information of the first terminal device, the first path type information, the path quantity information, the granularity information, and the reporting type in this embodiment of this application, refer to specific descriptions of the identification information of the access network element, the first path type information, the path quantity information, the granularity information, and the reporting type in FIG. 4. Details are not described again.

1502: The second terminal device sends the measurement result to the first terminal device.

The measurement result may be a result of measuring, by the second terminal device based on the angle assistance information, a signal (for example, the PRS) sent by the first terminal device.

The second terminal device may further send first indication information to the first terminal device. The first indication information may indicate whether an angle corresponding to the measurement result is within the angle indicated by the angle assistance information.

For a description of measuring, by the second terminal device based on the angle assistance information, the signal sent by the first terminal device, refer to the related description of measuring, by the terminal device based on the angle assistance information, the signal sent by the access network element in 402 in FIG. 4. For a description of the measurement result, refer to the related description of the measurement result in 402 in FIG. 4. Details are not described again.

Optionally, the second terminal device may further send one or more of the following information to the first terminal device: second indication information, and second path type information.

In the sidelink communication scenario, the second indication information may indicate an angular coordinate system corresponding to the measurement result, and the second path type information may indicate a type of a path corresponding to the measurement result.

Further, before sending the measurement result to the first terminal device, the second terminal device may further perform, based on the measurement request, beamforming at the angle indicated by the angle assistance information, to enhance energy of a path in a direction of the angle indicated by the angle assistance information, weaken energy of another reflection path, and improve accuracy of an angle, a latency, or RSRP of a signal obtained by the second terminal device through measurement, so as to improve accuracy of location information of the second terminal device determined by the first terminal device, and improve positioning precision. Beamforming may also be described as spatial filtering.

1503: The first terminal device determines the location information of the second terminal device based on the measurement result.

When the first indication information corresponding to the measurement result indicates that the angle corresponding to the measurement result is within the angle indicated by the angle assistance information, the first terminal device may determine the location information of the second terminal device based on the measurement result.

It should be noted that, in step 1503, the first terminal device may determine the location information of the second terminal device with reference to a manner in which the location management network element determines the location information of the terminal device based on the measurement result in FIG. 4. Details are not described herein again.

Based on this embodiment shown in FIG. 15, the second terminal device may measure or preferably measure, in the angle indicated by the angle assistance information, the signal sent by the first terminal device, to narrow down an angle search range, reduce a measurement error of measuring, by the second terminal device, the signal sent by the first terminal device, reduce processing complexity of the second terminal device, improve computing efficiency, and save computing time. In addition, when measuring the signal sent by the first terminal device, the second terminal device may further determine first indication information indicating whether an angle corresponding to the measurement result is within the angle indicated by the angle assistance information, so that the first terminal device determines, based on the first indication information, whether the measurement result corresponds to a LOS path or an NLOS path, and further determines the location information of the second terminal device based on a measurement result corresponding to the LOS path, to reduce an error of the location information that is of the second terminal device and that is determined based on the measurement result of the second terminal device, and improve positioning precision.

Corresponding to that in FIG. 15, the second terminal device measures the signal sent by the first terminal device, to obtain the measurement result, and the first terminal device determines the location information of the second terminal device based on the measurement result, as shown in FIG. 16, the first terminal device may alternatively measure a signal sent by the second terminal device, and determine location information of the first terminal device based on a measurement result.

FIG. 16 is a flowchart of a positioning information reporting method according to an embodiment of this application. As shown in FIG. 16, the method may include the following steps.

1601: A first terminal device sends a PRS sending request to a second terminal device.

The PRS sending request may include PRS configuration information, and the PRS sending request may be used to indicate the second terminal device to send a PRS based on the PRS configuration information.

Optionally, the PRS sending request includes first angle assistance information.

The first angle assistance information may indicate an angle between the first terminal device and the second terminal device.

For a description of the first angle assistance information, refer to the description of the angle assistance information in 1501 in FIG. 15. Details are not described again.

Optionally, before the first terminal device sends the PRS sending request to the second terminal device, the first terminal device may obtain a PRS resource, and send the PRS to the second terminal device based on the obtained PRS resource.

The PRS resource may be a preconfigured or allocated resource used for sidelink transmission, or may be a resource that is selected by the first terminal device from a configured or preconfigured resource pool and used for sidelink transmission.

1602: The second terminal device sends the PRS to the first terminal device.

When the PRS sending request includes the first angle assistance information, the second terminal device may adjust a PRS sending angle based on the first angle assistance information, so that the sent PRS can be more accurately measured by the first terminal device, and accuracy of receiving the PRS by the first terminal device is improved.

Optionally, the second terminal device may select, based on the first angle assistance information, a beam pointing to (or pointing as much as possible to) the first terminal device to send the PRS.

Optionally, when sending the PRS to the first terminal device, the second terminal device may further send second angle assistance information to the first terminal device.

The second angle assistance information may indicate the angle between the second terminal device and the first terminal device. For a description of the second angle assistance information, refer to the description of the angle assistance information in 1501 in FIG. 15. Details are not described again.

When the first terminal device receives the second angle assistance information, the first terminal device may receive the PRS based on the angle indicated by the second angle assistance information, to improve accuracy of receiving the PRS by the first terminal device.

1603: The first terminal device performs measurement based on the PRS to obtain a measurement result, and determines location information of the first terminal device based on the measurement result.

For a description of performing measurement by the first terminal device based on the PRS sent by the second terminal device, to obtain the measurement result, and determining the location information of the first terminal device based on the measurement result, refer to the related description of measuring, by the terminal device, the signal sent by the access network element, to obtain the measurement result, and determining the location information of the first terminal device based on the measurement result in 1403 and 1404 in FIG. 14. Details are not described again.

Based on this embodiment shown in FIG. 16, the second terminal device may send or preferably send the PRS to the first terminal device within the angle indicated by the first angle assistance information. The first terminal device may also measure or preferably measure, in the angle indicated by the second angle assistance information, the signal sent by the second terminal device, to improve accuracy of receiving the PRS by the first terminal device, narrow down an angle search range, reduce a measurement error of measuring, by the first terminal device, the signal sent by the second terminal device, reduce processing complexity of the first terminal device, improve computing efficiency, and save computing time.

In addition, when measuring the signal sent by the second terminal device, the first terminal device may further determine, based on the second angle assistance information, whether an angle corresponding to the measurement result is within the angle indicated by the second angle assistance information, to further determine whether the measurement result corresponds to a LOS path or an NLOS path, and determine the location information of the first terminal device based on a measurement result corresponding to the LOS path, to reduce an error of the location information that is of the first terminal device and that is determined based on the measurement result of the first terminal device, and improve positioning precision.

The foregoing mainly describes the solutions provided in embodiments of this application from a perspective of interaction between the devices. It may be understood that to implement the foregoing functions, the devices include hardware structures and/or software modules corresponding to the functions. A person of ordinary skill in the art should easily be aware that, in combination with algorithms and steps in the examples described in embodiments disclosed in this specification, this application can be implemented by hardware or a combination of hardware and computer software.

Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of each device may be obtained through division according to the foregoing method example. For example, the functional modules may be obtained through division corresponding to various functions, or two or more functions may be integrated into one processing module. The integrated module may be implemented in a form of hardware, or may be implemented in a form of a software functional module. It should be noted that, in embodiments of this application, module division is an example, and is merely a logical function division. In an actual implementation, another division manner may be used.

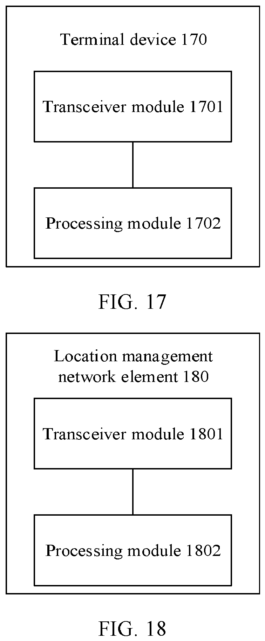

When each functional module is obtained through division based on each corresponding function, FIG. 17 shows a terminal device. The terminal device 170 may include a transceiver module 1701 and a processing module 1702. For example, the terminal device 170 may be a terminal device, or may be a chip used in a terminal device or another combined component or part that has a function of the terminal device. When the terminal device 170 is the terminal device, the transceiver module 1701 may be a transceiver, where the transceiver may include an antenna, a radio frequency circuit, and the like; and the processing module 1702 may be a processor (or a processing circuit), for example, a baseband processor, where the baseband processor may include one or more CPUs. When the terminal device 170 is the component that has the function of the terminal device, the transceiver module 1701 may be a radio frequency unit; and the processing module 1702 may be a processor (or a processing circuit), for example, a baseband processor. When the terminal device 170 is a chip system, the transceiver module 1701 may be an input/output interface of a chip (for example, a baseband chip). The processing module 1702 may be a processor (or a processing circuit) of the chip system, and may include one or more central processing units. It should be understood that the transceiver module 1701 in this embodiment of this application may be implemented by a transceiver or a transceiver-related circuit component, and the processing module 1702 may be implemented by a processor or a processor-related circuit component (or referred to as a processing circuit).

For example, the transceiver module 1701 may be configured to perform all sending and receiving operations performed by the terminal device in embodiments shown in FIG. 4 to FIG. 16, and/or configured to support another process of the technology described in this specification. The processing module 1702 may be configured to perform all operations other than the sending and receiving operations performed by the terminal device in embodiments shown in FIG. 4 to FIG. 16, and/or configured to support another process of the technology described in this specification.

In still another possible implementation, the transceiver module 1701 in FIG. 17 may be replaced with a transceiver, functions of the transceiver module 1701 may be integrated into the transceiver, the processing module 1702 may be replaced with a processor, and functions of the processing module 1702 may be integrated into the processor. Further, the terminal device 170 shown in FIG. 17 may include a memory. When the transceiver module 1701 is replaced with the transceiver and the processing module 1702 is replaced with the processor, the terminal device 170 in this embodiment of this application may be the communication apparatus shown in FIG. 3.

It should be noted that the transceiver module 1701 may further include a receiving module and a sending module. The receiving module may be configured to perform a receiving operation performed by the transceiver module 1701. The sending module 1701 may be configured to perform a sending operation performed by the transceiver module.

In addition, the transceiver may further include a receiver and a transmitter. The receiver may be configured to perform a receiving operation performed by the transceiver. The transmitter may be configured to perform a sending operation performed by the transceiver. The transceiver may alternatively be described as an input/output unit. The input/output unit may alternatively include an input unit and an output unit. The input unit may be configured to perform the receiving operation performed by the transceiver, and the output unit may be configured to perform the sending operation performed by the transceiver.

When each functional module is obtained through division based on each corresponding function, FIG. 18 shows a location management network element. The location management network element 180 may include a transceiver module 1801 and a processing module 1802. For example, the location management network element 180 may be a location management network element, or may be a chip used in a location management network element or another combined component or part that has a function of the location management network element. When the location management network element 180 is the location management network element, the transceiver module 1801 may be a transceiver, where the transceiver may include an antenna, a radio frequency circuit, and the like; and the processing module 1802 may be a processor (or a processing circuit), for example, a baseband processor, where the baseband processor may include one or more CPUs. When the location management network element 180 is the component that has the function of the location management network element, the transceiver module 1801 may be a radio frequency unit; and the processing module 1802 may be a processor (or a processing circuit), for example, a baseband processor. When the location management network element 180 is a chip system, the transceiver module 1801 may be an input/output interface of a chip (for example, a baseband chip). The processing module 1802 may be a processor (or a processing circuit) of the chip system, and may include one or more central processing units. It should be understood that the transceiver module 1801 in this embodiment of this application may be implemented by a transceiver or a transceiver-related circuit component, and the processing module 1802 may be implemented by a processor or a processor-related circuit component (or referred to as a processing circuit).

For example, the transceiver module 1801 may be configured to perform all sending and receiving operations performed by the location management network element in embodiments shown in FIG. 4 to FIG. 16, and/or configured to support another process of the technology described in this specification. The processing module 1802 may be configured to perform all operations other than the sending and receiving operations performed by the location management network element in embodiments shown in FIG. 4 to FIG. 16, and/or configured to support another process of the technology described in this specification.

In still another possible implementation, the transceiver module 1801 in FIG. 18 may be replaced with a transceiver, functions of the transceiver module 1801 may be integrated into the transceiver, the processing module 1802 may be replaced with a processor, and functions of the processing module 1802 may be integrated into the processor. Further, the location management network element 180 shown in FIG. 18 may include a memory. When the transceiver module 1801 is replaced with the transceiver and the processing module 1802 is replaced with the processor, the location management network element 180 in this embodiment of this application may be the communication apparatus shown in FIG. 3.

It should be noted that the transceiver module 1801 may further include a receiving module and a sending module. The receiving module may be configured to perform a receiving operation performed by the transceiver module 1801. The sending module 1801 may be configured to perform a sending operation performed by the transceiver module.

In addition, the transceiver may further include a receiver and a transmitter. The receiver may be configured to perform a receiving operation performed by the transceiver. The transmitter may be configured to perform a sending operation performed by the transceiver. The transceiver may alternatively be described as an input/output unit. The input/output unit may alternatively include an input unit and an output unit. The input unit may be configured to perform the receiving operation performed by the transceiver, and the output unit may be configured to perform the sending operation performed by the transceiver.

An embodiment of this application further provides a computer-readable storage medium. All or some of the processes in the foregoing method embodiments may be implemented by a computer program instructing related hardware. The program may be stored in the computer-readable storage medium. When the program is executed, the processes of the foregoing method embodiments may be included. The computer-readable storage medium may be an internal storage unit of the terminal (including a data transmitting end and/or a data receiving end) in any one of the foregoing embodiments, for example, a hard disk drive or a memory of the terminal. Alternatively, the computer-readable storage medium may be an external storage device of the terminal, for example, a plug-in hard disk, a smart media card (smart media card, SMC), a secure digital (secure digital, SD) card, a flash card (flash card), or the like that are configured on the terminal. Further, the computer-readable storage medium may alternatively include both of the internal storage unit and the external storage device that are of the terminal. The computer-readable storage medium is configured to store the computer program and other programs and data that are required by the terminal. The computer-readable storage medium may be further configured to temporarily store data that has been output or is to be output.

It should be noted that, in the specification, claims, and accompanying drawings of this application, the terms "first", "second", and the like are intended to distinguish between different objects but do not indicate a particular order. In addition, the terms "include" and "have" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may indicate a, b, c, "a and b", "a and c", "b and c", or "a, b, and c", where a, b, and c may be singular or plural.

The foregoing descriptions about implementations allow a person skilled in the art to understand that, for the purpose of convenient and brief description, division of the foregoing functional modules is merely used as an example for illustration. In actual application, the foregoing functions may be allocated to different functional modules for implementation based on a requirement, that is, an internal structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A positioning information reporting method, comprising:

    obtaining, by a terminal device, request location information of a location management network element, wherein the request location information comprises angle assistance information, and the angle assistance information indicates an angle between an access network element and the terminal device; and
    sending, by the terminal device, provide location information to the location management network element, wherein the provide location information comprises a measurement result, and the measurement result is a result of measuring, by the terminal device based on the angle assistance information, a signal sent by the access network element.

2. The method according to claim 1, wherein
the provide location information further comprises first indication information corresponding to the measurement result, and the first indication information indicates whether an angle corresponding to the measurement result is within the angle indicated by the angle assistance information.

3. The method according to claim 1 or 2, wherein
the angle assistance information comprises azimuth angle information and/or zenith angle information, the azimuth angle information indicates an included angle that is on a horizontal plane and between the access network element and the terminal device, and the zenith angle information indicates an included angle between a zenith direction and a direction of the access network element relative to the terminal device.

4. The method according to claim 3, wherein

    the azimuth angle information comprises one or more of the following information: an azimuth angle value, an azimuth angle range, a first value, preset azimuth angle value information, and preset azimuth angle range information; and
    the azimuth angle range is obtained by adding or subtracting the azimuth angle value and the first value, the preset azimuth angle value information indicates the azimuth angle value, and the preset azimuth angle range information indicates the azimuth angle range.

**5.** The method according to claim 3 or 4, wherein
the azimuth angle information comprises the azimuth angle value and the first value, and the first value is 0.

**6.** The method according to any one of claims 3 to 5, wherein

the zenith angle information comprises one or more of the following information: a zenith angle value, a zenith angle range, a second value, preset zenith angle value information, and preset zenith angle range information; and
the zenith angle range is obtained by adding or subtracting the zenith angle value and the second value, the preset zenith angle value information indicates the zenith angle value, and the preset zenith angle range information indicates the zenith angle range.

**7.** The method according to any one of claims 3 to 6, wherein
the zenith angle information comprises the zenith angle value and the second value, and the second value is 0.

**8.** The method according to any one of claims 1 to 7, wherein

the request location information further comprises one or more of the following information: identification information of the access network element, first path type information, path quantity information, granularity information, and a reporting type; and
the first path type information indicates a type of a path corresponding to the signal that is of the access network element and that is measured by the terminal device; when the path quantity information indicates that a path quantity is N, the measurement result of measuring the signal of the access network element by the terminal device corresponds to N paths, wherein $N \geq 1$; the granularity information indicates a granularity of the measurement result; and the reporting type is periodic reporting or aperiodic reporting.

**9.** The method according to any one of claims 1 to 8, wherein
the request location information is long term evolution positioning protocol LPP request location information, and the provide location information is LPP provide location information.

**10.** The method according to any one of claims 1 to 9, wherein

the measurement result comprises one or more of the following: an angle of arrival, a reference signal time difference RSTD, reference signal received power RSRP, and round trip time RTT; and
the angle of arrival is an angle at which the signal sent by the access network element reaches the terminal device.

**11.** The method according to claim 10, wherein
the angle of arrival comprises a first azimuth angle value and a first zenith angle value, the first azimuth angle value is an included angle that is measured by the terminal device and that is on the horizontal plane and between the access network element and the terminal device, and the first zenith angle value is an included angle that is measured by the terminal device and that is between the zenith direction and the direction of the access network element relative to the terminal device.

**12.** The method according to any one of claims 1 to 11, wherein

the provide location information further comprises one or more of the following information: second indication information, and second path type information; and
the second indication information indicates an angular coordinate system corresponding to the measurement result, and the second path type information indicates a type of a path corresponding to the measurement result.

**13.** The method according to any one of claims 1 to 12, wherein the method further comprises:
performing, by the terminal device based on the request location information, beamforming at the angle indicated by the angle assistance information.

**14.** A positioning information reporting method, comprising:

sending, by a location management network element, request location information to a terminal device, wherein the request location information comprises angle assistance information, and the angle assistance information indicates an angle between an access network element and the terminal device;

obtaining, by the location management network element, provide location information of the terminal device, wherein the provide location information comprises a measurement result, and the measurement result is a result of measuring, by the terminal device based on the angle assistance information, a signal sent by the access network element; and

determining, by the location management network element, location information of the terminal device based on the provide location information.

15. The method according to claim 14, wherein
the provide location information further comprises first indication information corresponding to the measurement result, and the first indication information indicates whether an angle corresponding to the measurement result is within the angle indicated by the angle assistance information.

16. The method according to claim 14 or 15, wherein
the angle assistance information comprises azimuth angle information and zenith angle information, the azimuth angle information indicates an included angle that is on a horizontal plane and between the access network element and the terminal device, and the zenith angle information indicates an included angle between a zenith direction and a direction of the access network element relative to the terminal device.

17. The method according to claim 16, wherein

the azimuth angle information comprises one or more of the following information: an azimuth angle value, an azimuth angle range, a first value, preset azimuth angle value information, and preset azimuth angle range information; and

the azimuth angle range is obtained by adding or subtracting the azimuth angle value and the first value, the preset azimuth angle value information indicates the azimuth angle value, and the preset azimuth angle range information indicates the azimuth angle range.

18. The method according to claim 16 or 17, wherein
the azimuth angle information comprises the azimuth angle value and the first value, and the first value is 0.

19. The method according to any one of claims 16 to 18, wherein

the zenith angle information comprises one or more of the following information: a zenith angle value, a zenith angle range, a second value, preset zenith angle value information, and preset zenith angle range information; and

the zenith angle range is obtained by adding or subtracting the zenith angle value and the second value, the preset zenith angle value information indicates the zenith angle value, and the preset zenith angle range information indicates the zenith angle range.

20. The method according to any one of claims 16 to 19, wherein
the zenith angle information comprises the zenith angle value and the second value, and the second value is 0.

21. The method according to any one of claims 14 to 20, wherein

the request location information further comprises one or more of the following information: identification information of the access network element, first path type information, path quantity information, granularity information, and a reporting type; and

the first path type information indicates a type of a path corresponding to the signal that is of the access network element and that is measured by the terminal device; when the path quantity information indicates that a path quantity is N, the measurement result of measuring the signal of the access network element by the terminal device corresponds to N paths, wherein N ≥ 1; the granularity information indicates a granularity of the measurement result; and the reporting type is periodic reporting or aperiodic reporting.

22. The method according to any one of claims 14 to 21, wherein
the request location information is long term evolution positioning protocol LPP request location information, and the provide location information is LPP provide location information.

23. The method according to any one of claims 14 to 22, wherein

the measurement result comprises one or more of the following: an angle of arrival, a reference signal time difference RSTD, reference signal received power RSRP, and round trip time RTT; and
the angle of arrival is an angle at which the signal sent by the access network element reaches the terminal device.

24. The method according to claim 23, wherein
the angle of arrival comprises a first azimuth angle value and a first zenith angle value, the first azimuth angle value is an included angle that is measured by the terminal device and that is on the horizontal plane and between the access network element and the terminal device, and the first zenith angle value is an included angle that is measured by the terminal device and that is between the zenith direction and the direction of the access network element relative to the terminal device.

25. The method according to any one of claims 14 to 24, wherein

the provide location information further comprises one or more of the following information: second indication information, and second path type information; and
the second indication information indicates an angular coordinate system corresponding to the measurement result, and the second path type information indicates a type of a path corresponding to the measurement result.

26. The method according to any one of claims 14 to 25, wherein the determining, by the location management network element, location information of the terminal device based on the provide location information comprises:
when the first indication information indicates that the angle corresponding to the measurement result is within the angle indicated by the angle assistance information, determining, by the location management network element, the location information of the terminal device based on the provide location information.

27. The method according to any one of claims 14 to 26, wherein before the location management network element sends the request location information to the terminal device, the method further comprises:

obtaining, by the location management network element, historical location information of the terminal device; and
determining, by the location management network element, the angle assistance information based on the historical location information of the terminal device.

28. A positioning information reporting method, comprising:

sending, by a terminal device, request assistance data to a location management network element;
obtaining, by the terminal device, provide assistance information of the location management network element, wherein the provide assistance information comprises angle assistance information, and the angle assistance information indicates an angle between an access network element and the terminal device;
measuring, by the terminal device based on the provide assistance information, a signal sent by the access network element, to obtain a measurement result; and
determining, by the terminal device, location information of the terminal device based on the measurement result.

29. The method according to claim 28, comprising:
sending, by the terminal device, the location information of the terminal device to the location management network element.

30. A positioning information reporting method, comprising:

obtaining, by a location management network element, request assistance data of a terminal device; and
sending, by the location management network element, provide assistance information to the terminal device, wherein the provide assistance information comprises angle assistance information, and the angle assistance information indicates an angle between an access network element and the terminal device.

31. The method according to claim 28, comprising:
obtaining, by the location management network element, location information of the terminal device, wherein the location information of the terminal device is determined by the terminal device based on a measurement result, and the measurement result is a result of measuring, by the terminal device based on the angle assistance information, a signal sent by the access network element.

**32.** A positioning information reporting method, comprising:

receiving, by a second terminal device, a measurement request from a first terminal device, wherein the measurement request comprises angle assistance information, and the angle assistance information indicates an angle between the first terminal device and the second terminal device; and
sending, by the second terminal device, a measurement result to the first terminal device, wherein the measurement result is a result of measuring, by the second terminal device based on the angle assistance information, a signal sent by the first terminal device.

**33.** The method according to claim 32, wherein the method further comprises:
sending, by the second terminal device to the first terminal device, first indication information corresponding to the measurement result, wherein the first indication information indicates whether an angle corresponding to the measurement result is within the angle indicated by the angle assistance information.

**34.** The method according to claim 32 or 33, wherein
the angle assistance information comprises azimuth angle information and/or zenith angle information, the azimuth angle information indicates an included angle that is on a horizontal plane and between the first terminal device and the second terminal device, and the zenith angle information indicates an included angle between a zenith direction and a direction of the first terminal device relative to the second terminal device.

**35.** The method according to claim 34, wherein

the azimuth angle information comprises one or more of the following information: an azimuth angle value, an azimuth angle range, a first value, preset azimuth angle value information, and preset azimuth angle range information; and
the azimuth angle range is obtained by adding or subtracting the azimuth angle value and the first value, the preset azimuth angle value information indicates the azimuth angle value, and the preset azimuth angle range information indicates the azimuth angle range.

**36.** The method according to claim 34 or 35, wherein
the azimuth angle information comprises the azimuth angle value and the first value, and the first value is 0.

**37.** The method according to any one of claims 34 to 36, wherein

the zenith angle information comprises one or more of the following information: a zenith angle value, a zenith angle range, a second value, preset zenith angle value information, and preset zenith angle range information; and
the zenith angle range is obtained by adding or subtracting the zenith angle value and the second value, the preset zenith angle value information indicates the zenith angle value, and the preset zenith angle range information indicates the zenith angle range.

**38.** The method according to any one of claims 34 to 37, wherein
the zenith angle information comprises the zenith angle value and the second value, and the second value is 0.

**39.** The method according to any one of claims 32 to 38, wherein

the measurement request further comprises one or more of the following information: identification information of the first terminal device, first path type information, path quantity information, granularity information, and a reporting type; and
the first path type information indicates a type of a path corresponding to the signal that is of the first terminal device and that is measured by the second terminal device; when the path quantity information indicates that a path quantity is N, the measurement result of measuring the signal of the first terminal device by the second terminal device corresponds to N paths, wherein $N \geq 1$; the granularity information indicates a granularity of the measurement result; and the reporting type is periodic reporting or aperiodic reporting.

**40.** The method according to any one of claims 32 to 39, wherein

the measurement result comprises one or more of the following: an angle of arrival, a reference signal time difference RSTD, reference signal received power RSRP, and round trip time RTT; and
the angle of arrival is an angle at which the signal sent by the first terminal device reaches the second terminal device.

**41.** The method according to claim 40, wherein
the angle of arrival comprises a first azimuth angle value and a first zenith angle value, the first azimuth angle value is an included angle that is measured by the second terminal device and that is on the horizontal plane and between the first terminal device and the second terminal device, and the first zenith angle value is an included angle that is measured by the second terminal device and that is between the zenith direction and the direction of the first terminal device relative to the second terminal device.

**42.** The method according to any one of claims 32 to 41, wherein the method further comprises:

sending, by the second terminal device, one or more of the following information to the first terminal device: second indication information, and second path type information, wherein
the second indication information indicates an angular coordinate system corresponding to the measurement result, and the second path type information indicates a type of a path corresponding to the measurement result.

**43.** The method according to any one of claims 32 to 42, wherein the method further comprises:
performing, by the second terminal device based on the measurement request, beamforming at the angle indicated by the angle assistance information.

**44.** A positioning information reporting method, comprising:

sending, by a first terminal device, a measurement request to a second terminal device, wherein the measurement request comprises angle assistance information, and the angle assistance information indicates an angle between the first terminal device and the second terminal device;
obtaining, by the first terminal device, a measurement result of the second terminal device, wherein the measurement result is a result of measuring, by the second terminal device based on the angle assistance information, a signal sent by the first terminal device; and
determining, by the first terminal device, location information of the second terminal device based on the measurement result.

**45.** The method according to claim 44, wherein the method further comprises:
receiving, by the first terminal device from the second terminal device, first indication information corresponding to the measurement result, wherein the first indication information indicates whether an angle corresponding to the measurement result is within the angle indicated by the angle assistance information.

**46.** The method according to claim 44 or 45, wherein
the angle assistance information comprises azimuth angle information and zenith angle information, the azimuth angle information indicates an included angle that is on a horizontal plane and between the first terminal device and the second terminal device, and the zenith angle information indicates an included angle between a zenith direction and a direction of the first terminal device relative to the second terminal device.

**47.** The method according to claim 46, wherein

the azimuth angle information comprises one or more of the following information: an azimuth angle value, an azimuth angle range, a first value, preset azimuth angle value information, and preset azimuth angle range information; and
the azimuth angle range is obtained by adding or subtracting the azimuth angle value and the first value, the preset azimuth angle value information indicates the azimuth angle value, and the preset azimuth angle range information indicates the azimuth angle range.

**48.** The method according to claim 46 or 47, wherein
the azimuth angle information comprises the azimuth angle value and the first value, and the first value is 0.

**49.** The method according to any one of claims 46 to 48, wherein

the zenith angle information comprises one or more of the following information: a zenith angle value, a zenith angle range, a second value, preset zenith angle value information, and preset zenith angle range information; and
the zenith angle range is obtained by adding or subtracting the zenith angle value and the second value, the preset zenith angle value information indicates the zenith angle value, and the preset zenith angle range information indicates the zenith angle range.

**50.** The method according to any one of claims 46 to 49, wherein
the zenith angle information comprises the zenith angle value and the second value, and the second value is 0.

**51.** The method according to any one of claims 44 to 50, wherein

the measurement request further comprises one or more of the following information: identification information of the first terminal device, first path type information, path quantity information, granularity information, and a reporting type; and
the first path type information indicates a type of a path corresponding to the signal that is of the first terminal device and that is measured by the second terminal device; when the path quantity information indicates that a path quantity is N, the measurement result of measuring the signal of the first terminal device by the second terminal device corresponds to N paths, wherein N $\geq$ 1; the granularity information indicates a granularity of the measurement result; and the reporting type is periodic reporting or aperiodic reporting.

**52.** The method according to any one of claims 44 to 51, wherein

the measurement result comprises one or more of the following: an angle of arrival, a reference signal time difference RSTD, reference signal received power RSRP, and round trip time RTT; and
the angle of arrival is an angle at which the signal sent by the first terminal device reaches the second terminal device.

**53.** The method according to claim 52, wherein
the angle of arrival comprises a first azimuth angle value and a first zenith angle value, the first azimuth angle value is an included angle that is measured by the second terminal device and that is on the horizontal plane and between the first terminal device and the second terminal device, and the first zenith angle value is an included angle that is measured by the second terminal device and that is between the zenith direction and the direction of the first terminal device relative to the second terminal device.

**54.** The method according to any one of claims 44 to 53, wherein the method further comprises:

receiving, by the first terminal device, one or more of the following information from the second terminal device: second indication information, and second path type information, wherein
the second indication information indicates an angular coordinate system corresponding to the measurement result, and the second path type information indicates a type of a path corresponding to the measurement result.

**55.** The method according to any one of claims 44 to 54, wherein the determining, by the first terminal device, location information of the second terminal device based on the measurement result comprises:
when the first indication information indicates that the angle corresponding to the measurement result is within the angle indicated by the angle assistance information, determining, by the first terminal device, the location information of the second terminal device based on the measurement result.

**56.** The method according to any one of claims 44 to 55, wherein before the first terminal device sends the measurement request to the second terminal device, the method further comprises:

obtaining, by the first terminal device, historical location information of the second terminal device; and
determining, by the first terminal device, the angle assistance information based on the historical location information of the second terminal device.

**57.** A positioning information reporting method, comprising:

sending, by a first terminal device, a positioning reference signal PRS sending request to a second terminal device;

receiving, by the first terminal device, a PRS from the second terminal device, wherein the PRS comprises second angle assistance information, and the second angle assistance information indicates an angle between the second terminal device and the first terminal device;

measuring, by the first terminal device based on the second angle assistance information, the PRS sent by the second terminal device, to obtain a measurement result; and

determining, by the first terminal device, location information of the first terminal device based on the measurement result.

**58.** The method according to claim 57, wherein

the PRS sending request comprises first angle assistance information, and the first angle assistance information indicates the angle between the first terminal device and the second terminal device.

**59.** A positioning information reporting method, comprising:

receiving, by a second terminal device, a positioning reference signal PRS sending request from a first terminal device; and

sending, by the second terminal device, a PRS to the first terminal device, wherein the PRS comprises second angle assistance information, and the second angle assistance information indicates an angle between the second terminal device and the first terminal device.

**60.** The method according to claim 59, wherein

the PRS sending request comprises first angle assistance information, and the first angle assistance information indicates the angle between the first terminal device and the second terminal device; and

sending, by the second terminal device, the PRS to the first terminal device based on the first angle assistance information.

**61.** A communication apparatus, comprising:

a transceiver module, configured to obtain request location information of a location management network element, wherein the request location information comprises angle assistance information, and the angle assistance information indicates an angle between an access network element and a terminal device, wherein the transceiver module is further configured to send provide location information to the location management network element, wherein the provide location information comprises a measurement result, and the measurement result is a result of measuring, by the terminal device based on the angle assistance information, a signal sent by the access network element.

**62.** The apparatus according to claim 61, wherein

the provide location information further comprises first indication information corresponding to the measurement result, and the first indication information indicates whether an angle corresponding to the measurement result is within the angle indicated by the angle assistance information.

**63.** The apparatus according to claim 61 or 62, wherein

the angle assistance information comprises azimuth angle information and/or zenith angle information, the azimuth angle information indicates an included angle that is on a horizontal plane and between the access network element and the terminal device, and the zenith angle information indicates an included angle between a zenith direction and a direction of the access network element relative to the terminal device.

**64.** The apparatus according to claim 63, wherein

the azimuth angle information comprises one or more of the following information: an azimuth angle value, an azimuth angle range, a first value, preset azimuth angle value information, and preset azimuth angle range information; and

the azimuth angle range is obtained by adding or subtracting the azimuth angle value and the first value, the preset azimuth angle value information indicates the azimuth angle value, and the preset azimuth angle range information indicates the azimuth angle range.

**65.** The apparatus according to claim 63 or 64, wherein
the azimuth angle information comprises the azimuth angle value and the first value, and the first value is 0.

**66.** The apparatus according to any one of claims 63 to 65, wherein

the zenith angle information comprises one or more of the following information: a zenith angle value, a zenith angle range, a second value, preset zenith angle value information, and preset zenith angle range information; and
the zenith angle range is obtained by adding or subtracting the zenith angle value and the second value, the preset zenith angle value information indicates the zenith angle value, and the preset zenith angle range information indicates the zenith angle range.

**67.** The apparatus according to any one of claims 63 to 66, wherein
the zenith angle information comprises the zenith angle value and the second value, and the second value is 0.

**68.** The apparatus according to any one of claims 61 to 67, wherein

the request location information further comprises one or more of the following information: identification information of the access network element, first path type information, path quantity information, granularity information, and a reporting type; and
the first path type information indicates a type of a path corresponding to the signal that is of the access network element and that is measured by the terminal device; when the path quantity information indicates that a path quantity is N, the measurement result of measuring the signal of the access network element by the terminal device corresponds to N paths, wherein $N \geq 1$; the granularity information indicates a granularity of the measurement result; and the reporting type is periodic reporting or aperiodic reporting.

**69.** The apparatus according to any one of claims 61 to 68, wherein
the request location information is long term evolution positioning protocol LPP request location information, and the provide location information is LPP provide location information.

**70.** The apparatus according to any one of claims 61 to 69, wherein

the measurement result comprises one or more of the following: an angle of arrival, a reference signal time difference RSTD, reference signal received power RSRP, and round trip time RTT; and
the angle of arrival is an angle at which the signal sent by the access network element reaches the terminal device.

**71.** The apparatus according to claim 70, wherein
the angle of arrival comprises a first azimuth angle value and a first zenith angle value, the first azimuth angle value is an included angle that is measured by the terminal device and that is on the horizontal plane and between the access network element and the terminal device, and the first zenith angle value is an included angle that is measured by the terminal device and that is between the zenith direction and the direction of the access network element relative to the terminal device.

**72.** The apparatus according to any one of claims 61 to 71, wherein

the provide location information further comprises one or more of the following information: second indication information, and second path type information; and
the second indication information indicates an angular coordinate system corresponding to the measurement result, and the second path type information indicates a type of a path corresponding to the measurement result.

**73.** The apparatus according to any one of claims 61 to 72, comprising:
a processing module, configured to perform, based on the request location information, beamforming at the angle indicated by the angle assistance information.

**74.** A communication apparatus, comprising:

a transceiver module, configured to send request location information to a terminal device, wherein the request location information comprises angle assistance information, and the angle assistance information indicates an angle between an access network element and the terminal device, wherein

the transceiver module is further configured to obtain provide location information of the terminal device, wherein the provide location information comprises a measurement result, and the measurement result is a result of measuring, by the terminal device based on the angle assistance information, a signal sent by the access network element; and

a processing module, configured to determine location information of the terminal device based on the provide location information.

75. The apparatus according to claim 74, wherein
the provide location information further comprises first indication information corresponding to the measurement result, and the first indication information indicates whether an angle corresponding to the measurement result is within the angle indicated by the angle assistance information.

76. The apparatus according to claim 74 or 75, wherein
the angle assistance information comprises azimuth angle information and zenith angle information, the azimuth angle information indicates an included angle that is on a horizontal plane and between the access network element and the terminal device, and the zenith angle information indicates an included angle between a zenith direction and a direction of the access network element relative to the terminal device.

77. The apparatus according to claim 76, wherein

the azimuth angle information comprises one or more of the following information: an azimuth angle value, an azimuth angle range, a first value, preset azimuth angle value information, and preset azimuth angle range information; and

the azimuth angle range is obtained by adding or subtracting the azimuth angle value and the first value, the preset azimuth angle value information indicates the azimuth angle value, and the preset azimuth angle range information indicates the azimuth angle range.

78. The apparatus according to claim 76 or 77, wherein
the azimuth angle information comprises the azimuth angle value and the first value, and the first value is 0.

79. The apparatus according to any one of claims 76 to 78, wherein

the zenith angle information comprises one or more of the following information: a zenith angle value, a zenith angle range, a second value, preset zenith angle value information, and preset zenith angle range information; and

the zenith angle range is obtained by adding or subtracting the zenith angle value and the second value, the preset zenith angle value information indicates the zenith angle value, and the preset zenith angle range information indicates the zenith angle range.

80. The apparatus according to any one of claims 76 to 79, wherein
the zenith angle information comprises the zenith angle value and the second value, and the second value is 0.

81. The apparatus according to any one of claims 74 to 80, wherein

the request location information further comprises one or more of the following information: identification information of the access network element, first path type information, path quantity information, granularity information, and a reporting type; and

the first path type information indicates a type of a path corresponding to the signal that is of the access network element and that is measured by the terminal device; when the path quantity information indicates that a path quantity is N, the measurement result of measuring the signal of the access network element by the terminal device corresponds to N paths, wherein $N \geq 1$; the granularity information indicates a granularity of the measurement result; and the reporting type is periodic reporting or aperiodic reporting.

82. The apparatus according to any one of claims 74 to 81, wherein
the request location information is long term evolution positioning protocol LPP request location information, and the provide location information is LPP provide location information.

**83.** The apparatus according to any one of claims 74 to 82, wherein

the measurement result comprises one or more of the following: an angle of arrival, a reference signal time difference RSTD, reference signal received power RSRP, and round trip time RTT; and

the angle of arrival is an angle at which the signal sent by the access network element reaches the terminal device.

**84.** The apparatus according to claim 83, wherein
the angle of arrival comprises a first azimuth angle value and a first zenith angle value, the first azimuth angle value is an included angle that is measured by the terminal device and that is on the horizontal plane and between the access network element and the terminal device, and the first zenith angle value is an included angle that is measured by the terminal device and that is between the zenith direction and the direction of the access network element relative to the terminal device.

**85.** The apparatus according to any one of claims 74 to 84, wherein

the provide location information further comprises one or more of the following information: second indication information, and second path type information; and

the second indication information indicates an angular coordinate system corresponding to the measurement result, and the second path type information indicates a type of a path corresponding to the measurement result.

**86.** The apparatus according to any one of claims 74 to 85, wherein
when the first indication information indicates that the angle corresponding to the measurement result is within the angle indicated by the angle assistance information, the processing module determines the location information of the terminal device based on the provide location information.

**87.** The apparatus according to any one of claims 74 to 86, wherein

the transceiver module is further configured to obtain historical location information of the terminal device; and

the processing module is further configured to determine the angle assistance information based on the historical location information of the terminal device.

**88.** A communication apparatus, comprising:

a transceiver module, configured to send request assistance data to a location management network element, wherein

the transceiver module is further configured to obtain provide assistance information of the location management network element, wherein the provide assistance information comprises angle assistance information, and the angle assistance information indicates an angle between an access network element and the terminal device; and

a processing module, configured to measure, based on the provide assistance information, a signal sent by the access network element, to obtain a measurement result, wherein

the processing module is further configured to determine location information of the terminal device based on the measurement result.

**89.** The apparatus according to claim 88, wherein
the transceiver module is further configured to send the location information of the terminal device to the location management network element.

**90.** A communication apparatus, comprising:

a transceiver module, configured to obtain request assistance data of a terminal device, wherein

the transceiver module is further configured to send provide assistance information to the terminal device, wherein the provide assistance information comprises angle assistance information, and the angle assistance information indicates an angle between an access network element and the terminal device.

**91.** The apparatus according to claim 90, wherein
the transceiver module is further configured to obtain location information of the terminal device, wherein the location information of the terminal device is determined by the terminal device based on a measurement result, and the measurement result is a result of measuring, by the terminal device based on the angle assistance information, a signal sent by the access network element.

**92.** A communication apparatus, comprising:

a transceiver module, configured to receive a measurement request from a first terminal device, wherein the measurement request comprises angle assistance information, and the angle assistance information indicates an angle between the first terminal device and a second terminal device, wherein the transceiver module is further configured to send a measurement result to the first terminal device, wherein the measurement result is a result of measuring, by the second terminal device based on the angle assistance information, a signal sent by the first terminal device.

**93.** The apparatus according to claim 92, wherein the transceiver module is further configured to send, to the first terminal device, first indication information corresponding to the measurement result, wherein the first indication information indicates whether an angle corresponding to the measurement result is within the angle indicated by the angle assistance information.

**94.** The apparatus according to claim 92 or 93, wherein the angle assistance information comprises azimuth angle information and/or zenith angle information, the azimuth angle information indicates an included angle that is on a horizontal plane and between the first terminal device and the second terminal device, and the zenith angle information indicates an included angle between a zenith direction and a direction of the first terminal device relative to the second terminal device.

**95.** The apparatus according to claim 94, wherein

the azimuth angle information comprises one or more of the following information: an azimuth angle value, an azimuth angle range, a first value, preset azimuth angle value information, and preset azimuth angle range information; and the azimuth angle range is obtained by adding or subtracting the azimuth angle value and the first value, the preset azimuth angle value information indicates the azimuth angle value, and the preset azimuth angle range information indicates the azimuth angle range.

**96.** The apparatus according to claim 94 or 95, wherein the azimuth angle information comprises the azimuth angle value and the first value, and the first value is 0.

**97.** The apparatus according to any one of claims 94 to 96, wherein

the zenith angle information comprises one or more of the following information: a zenith angle value, a zenith angle range, a second value, preset zenith angle value information, and preset zenith angle range information; and the zenith angle range is obtained by adding or subtracting the zenith angle value and the second value, the preset zenith angle value information indicates the zenith angle value, and the preset zenith angle range information indicates the zenith angle range.

**98.** The apparatus according to any one of claims 94 to 97, wherein the zenith angle information comprises the zenith angle value and the second value, and the second value is 0.

**99.** The apparatus according to any one of claims 92 to 98, wherein

the measurement request further comprises one or more of the following information: identification information of the first terminal device, first path type information, path quantity information, granularity information, and a reporting type; and the first path type information indicates a type of a path corresponding to the signal that is of the first terminal device and that is measured by the second terminal device; when the path quantity information indicates that a path quantity is N, the measurement result of measuring the signal of the first terminal device by the second terminal device corresponds to N paths, wherein $N \geq 1$; the granularity information indicates a granularity of the measurement result; and the reporting type is periodic reporting or aperiodic reporting.

**100.** The apparatus according to any one of claims 92 to 99, wherein

the measurement result comprises one or more of the following: an angle of arrival, a reference signal time difference RSTD, reference signal received power RSRP, and round trip time RTT; and

the angle of arrival is an angle at which the signal sent by the first terminal device reaches the second terminal device.

101. The apparatus according to claim 100, wherein

the angle of arrival comprises a first azimuth angle value and a first zenith angle value, the first azimuth angle value is an included angle that is measured by the second terminal device and that is on the horizontal plane and between the first terminal device and the second terminal device, and the first zenith angle value is an included angle that is measured by the second terminal device and that is between the zenith direction and the direction of the first terminal device relative to the second terminal device.

102. The apparatus according to any one of claims 92 to 101, wherein

the transceiver module is further configured to send one or more of the following information to the first terminal device: second indication information, and second path type information; and

the second indication information indicates an angular coordinate system corresponding to the measurement result, and the second path type information indicates a type of a path corresponding to the measurement result.

103. The apparatus according to any one of claims 92 to 102, comprising:

a processing module, configured to perform, based on the measurement request, beamforming at the angle indicated by the angle assistance information.

104. A communication apparatus, comprising:

a transceiver module, configured to send a measurement request to a second terminal device, wherein the measurement request comprises angle assistance information, and the angle assistance information indicates an angle between a first terminal device and the second terminal device, wherein

the transceiver module is further configured to obtain a measurement result of the second terminal device, wherein the measurement result is a result of measuring, by the second terminal device based on the angle assistance information, a signal sent by the first terminal device; and

a processing module, configured to determine location information of the second terminal device based on the measurement result.

105. The apparatus according to claim 104, wherein

the transceiver module is further configured to receive, from the second terminal device, first indication information corresponding to the measurement result, wherein the first indication information indicates whether an angle corresponding to the measurement result is within the angle indicated by the angle assistance information.

106. The apparatus according to claim 104 or 105, wherein

the angle assistance information comprises azimuth angle information and zenith angle information, the azimuth angle information indicates an included angle that is on a horizontal plane and between the first terminal device and the second terminal device, and the zenith angle information indicates an included angle between a zenith direction and a direction of the first terminal device relative to the second terminal device.

107. The apparatus according to claim 106, wherein

the azimuth angle information comprises one or more of the following information: an azimuth angle value, an azimuth angle range, a first value, preset azimuth angle value information, and preset azimuth angle range information; and

the azimuth angle range is obtained by adding or subtracting the azimuth angle value and the first value, the preset azimuth angle value information indicates the azimuth angle value, and the preset azimuth angle range information indicates the azimuth angle range.

108. The apparatus according to claim 106 or 107, wherein

the azimuth angle information comprises the azimuth angle value and the first value, and the first value is 0.

109. The apparatus according to any one of claims 106 to 108, wherein

the zenith angle information comprises one or more of the following information: a zenith angle value, a zenith angle range, a second value, preset zenith angle value information, and preset zenith angle range information; and

the zenith angle range is obtained by adding or subtracting the zenith angle value and the second value, the preset zenith angle value information indicates the zenith angle value, and the preset zenith angle range information indicates the zenith angle range.

110. The apparatus according to any one of claims 106 to 109, wherein
the zenith angle information comprises the zenith angle value and the second value, and the second value is 0.

111. The apparatus according to any one of claims 104 to 110, wherein

the measurement request further comprises one or more of the following information: identification information of the first terminal device, first path type information, path quantity information, granularity information, and a reporting type; and
the first path type information indicates a type of a path corresponding to the signal that is of the first terminal device and that is measured by the second terminal device; when the path quantity information indicates that a path quantity is N, the measurement result of measuring the signal of the first terminal device by the second terminal device corresponds to N paths, wherein $N \geq 1$; the granularity information indicates a granularity of the measurement result; and the reporting type is periodic reporting or aperiodic reporting.

112. The apparatus according to any one of claims 104 to 111, wherein

the measurement result comprises one or more of the following: an angle of arrival, a reference signal time difference RSTD, reference signal received power RSRP, and round trip time RTT; and
the angle of arrival is an angle at which the signal sent by the first terminal device reaches the second terminal device.

113. The apparatus according to claim 112, wherein
the angle of arrival comprises a first azimuth angle value and a first zenith angle value, the first azimuth angle value is an included angle that is measured by the second terminal device and that is on the horizontal plane and between the first terminal device and the second terminal device, and the first zenith angle value is an included angle that is measured by the second terminal device and that is between the zenith direction and the direction of the first terminal device relative to the second terminal device.

114. The apparatus according to any one of claims 104 to 113, wherein

the transceiver module is further configured to receive one or more of the following information from the second terminal device: second indication information, and second path type information; and
the second indication information indicates an angular coordinate system corresponding to the measurement result, and the second path type information indicates a type of a path corresponding to the measurement result.

115. The apparatus according to any one of claims 104 to 114, wherein
the processing module is specifically configured to: when the first indication information indicates that the angle corresponding to the measurement result is within the angle indicated by the angle assistance information, determine the location information of the second terminal device based on the measurement result.

116. The apparatus according to any one of claims 104 to 115, wherein

the transceiver module is further configured to obtain historical location information of the second terminal device; and
the processing module is further configured to determine the angle assistance information based on the historical location information of the second terminal device.

117. A communication apparatus, comprising:

a transceiver module, configured to send a positioning reference signal PRS sending request to a second terminal device, wherein

the transceiver module is further configured to receive a PRS from the second terminal device, wherein the PRS comprises second angle assistance information, and the second angle assistance information indicates an angle between the second terminal device and a first terminal device; and

a processing module, configured to measure, based on the second angle assistance information, the PRS sent by the second terminal device, to obtain a measurement result, wherein

the processing module is further configured to determine location information of the first terminal device based on the measurement result.

118. The apparatus according to claim 117, wherein

the PRS sending request comprises first angle assistance information, and the first angle assistance information indicates the angle between the first terminal device and the second terminal device.

119. A communication apparatus, comprising:

a transceiver module, configured to receive a positioning reference signal PRS sending request from a first terminal device, wherein

the transceiver module is further configured to send a PRS to the first terminal device, wherein the PRS comprises second angle assistance information, and the second angle assistance information indicates an angle between a second terminal device and the first terminal device.

120. The apparatus according to claim 119, wherein

the PRS sending request comprises first angle assistance information, and the first angle assistance information indicates the angle between the first terminal device and the second terminal device; and

the transceiver module is further configured to send the PRS to the first terminal device based on the first angle assistance information.

121. A communication apparatus, wherein the communication apparatus comprises a processor, and the processor is configured to run a computer program or instructions, so that the communication apparatus performs the positioning information reporting method according to any one of claims 1 to 13, or performs the positioning information reporting method according to any one of claims 14 to 27, or performs the positioning information reporting method according to claim 28 or 29, or performs the positioning information reporting method according to claim 30 or 31, or performs the positioning information reporting method according to any one of claims 32 to 43, or performs the positioning information reporting method according to any one of claims 44 to 56, or performs the positioning information reporting method according to claim 57 or 58, or performs the positioning information reporting method according to claim 59 or 60.

122. A communication apparatus, wherein the communication apparatus comprises an interface circuit and a logic circuit, the interface circuit is configured to obtain input information and/or output information, and the logic circuit is configured to perform the positioning information reporting method according to any one of claims 1 to 13, or perform the positioning information reporting method according to any one of claims 14 to 27, or perform the positioning information reporting method according to claim 28 or 29, or perform the positioning information reporting method according to claim 30 or 31, or perform the positioning information reporting method according to any one of claims 32 to 43, or perform the positioning information reporting method according to any one of claims 44 to 56, or perform the positioning information reporting method according to claim 57 or 58, or perform the positioning information reporting method according to claim 59 or 60, to process and/or generate the output information based on the input information.

123. A computer-readable storage medium, wherein the computer-readable storage medium stores computer instructions or a program, and when the computer instructions or the program runs on a computer, the computer is enabled to perform the positioning information reporting method according to any one of claims 1 to 13, or perform the positioning information reporting method according to any one of claims 14 to 27, or perform the positioning information reporting method according to claim 28 or 29, or perform the positioning information reporting method according to claim 30 or 31, or perform the positioning information reporting method according to any one of claims 32 to 43, or perform the positioning information reporting method according to any one of claims 44 to 56, or perform the positioning information reporting method according to claim 57 or 58, or perform the positioning information reporting method according to claim 59 or 60.

124. A computer program product, wherein the computer program product comprises computer instructions, and when some or all of the computer instructions are run on a computer, the computer is enabled to perform the positioning information reporting method according to any one of claims 1 to 13, or perform the positioning information reporting method according to any one of claims 14 to 27, or perform the positioning information reporting method according to claim 28 or 29, or perform the positioning information reporting method according to claim 30 or 31, or perform the positioning information reporting method according to any one of claims 32 to 43, or perform the positioning information reporting method according to any one of claims 44 to 56, or perform the positioning information reporting method according to claim 57 or 58, or perform the positioning information reporting method according to claim 59 or 60.

FIG. 1

FIG. 2a

FIG. 2b

FIG. 3

FIG. 4

FIG. 5

FIG. 6

PRS signal

θ

τ    θ

Antenna
array
element 1

Antenna
array
element 2

Antenna
array
element 3

FIG. 7

Access network
element 1

t3 – t1

Terminal
device

Access network
element 3

Access network
element 2

t2 – t1

FIG. 8

AOD 2

AOD 1

Access
network
element 2

Access
network
element 1

Terminal device

FIG. 9

Access network
element

Terminal
device

t1

t2

$t_A = t4 - t1$

$t_B = t2 - t3$

t3

t4

FIG. 10

DL-TDOA-30 KHz

①: (m, n, p) = 141, NLOS
②: (m, n, p) = 141, LOS
③: (m, n, p) = 111, NLOS
④: (m, n, p) = 111, LOS

FIG. 11

FIG. 12

Access network
element 2

▲

RTT 2

RTT 1
▲

Access network
element 1

●

Terminal device

RTT 3

▲

Access network
element 3

FIG. 13

| Terminal device | | Location management network element |
|---|---|---|

1401: Send request assistance data

1402: Send provide assistance information

1403: Measure, based on the provide assistance information, a signal sent by an access network element, to obtain a measurement result

1404: Determine location information of the terminal device based on the measurement result

FIG. 14

**First terminal device** — **Second terminal device**

1501: Send a measurement request

1502: Send a measurement result

1503: Determine location information of the second terminal device based on the measurement result

FIG. 15

**First terminal device** — **Second terminal device**

1601: Send a PRS sending request

1602: Send a PRS

1603: Perform measurement based on the PRS to obtain a measurement result, and determine location information of the first terminal device based on the measurement result

FIG. 16

Terminal device 170

Transceiver module 1701

Processing module 1702

FIG. 17

Location management
network element 180

Transceiver module 1801

Processing module 1802

FIG. 18

# INTERNATIONAL SEARCH REPORT

International application No.

**PCT/CN2022/083189**

| A. | CLASSIFICATION OF SUBJECT MATTER |
|---|---|

H04W 24/08(2009.01)i;  H04W 64/00(2009.01)i

According to International Patent Classification (IPC) or to both national classification and IPC

| B. | FIELDS SEARCHED |
|---|---|

Minimum documentation searched (classification system followed by classification symbols)

    H04W

Documentation searched other than minimum documentation to the extent that such documents are included in the fields searched

Electronic data base consulted during the international search (name of data base and, where practicable, search terms used)

    CNABS; CNTXT; VEN; ENTXTC; CNKI; 3GPP: 定位, 位置, 上报, 终端, 位置管理, 定位服务, 接入网, 角度, 方位, 请求, 测量, 辅助信息, 定位参考信号, 位置管理功能, 定位协议, 侧链, 直连, location, positioning, report, terminal, UE, location management, location service, access network, angle, position, request, measure, assistant information, PRS, LMF, SLP, sidelink, D2D

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 110012536 A (HUAWEI TECHNOLOGIES CO., LTD.) 12 July 2019 (2019-07-12) description, paragraphs [0004]-[0072], [0129]-[0144] and [0273]-[0276] | 1-31, 61-91, 121-124 |
| Y | CN 110012536 A (HUAWEI TECHNOLOGIES CO., LTD.) 12 July 2019 (2019-07-12) description, paragraphs [0004]-[0072], [0129]-[0144] and [0273]-[0276] | 32-60, 92-120 |
| Y | CN 111989585 A (BEIJING XIAOMI MOBILE SOFTWARE CO., LTD.) 24 November 2020 (2020-11-24) description, paragraphs [0118]-[0127] | 32-60, 92-120 |
| A | CN 112136335 A (BEIJING XIAOMI MOBILE SOFTWARE CO., LTD.) 25 December 2020 (2020-12-25) entire document | 1-124 |
| A | CN 110022523 A (HUAWEI TECHNOLOGIES CO., LTD.) 16 July 2019 (2019-07-16) entire document | 1-124 |
| A | CN 111586742 A (HUAWEI TECHNOLOGIES CO., LTD.) 25 August 2020 (2020-08-25) entire document | 1-124 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 June 2022** | **22 June 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2022/083189** |

**C.      DOCUMENTS CONSIDERED TO BE RELEVANT**

| Category* | Citation of document, with indication, where appropriate, of the relevant passages | Relevant to claim No. |
| --- | --- | --- |
| A | US 2021058889 A1 (QUALCOMM INCORPORATED) 25 February 2021 (2021-02-25)<br>entire document | 1-124 |

Form PCT/ISA/210 (second sheet) (January 2015)

**INTERNATIONAL SEARCH REPORT**
Information on patent family members

| International application No. |
| --- |
| **PCT/CN2022/083189** |

| Patent document cited in search report | | | Publication date (day/month/year) | Patent family member(s) | | | Publication date (day/month/year) |
| --- | --- | --- | --- | --- | --- | --- | --- |
| CN | 110012536 | A | 12 July 2019 | EP | 3726896 | A1 | 21 October 2020 |
| | | | | US | 2020333427 | A1 | 22 October 2020 |
| | | | | WO | 2019134555 | A1 | 11 July 2019 |
| CN | 111989585 | A | 24 November 2020 | None | | | |
| CN | 112136335 | A | 25 December 2020 | None | | | |
| CN | 110022523 | A | 16 July 2019 | EP | 3726863 | A1 | 21 October 2020 |
| | | | | US | 2020333424 | A1 | 22 October 2020 |
| | | | | WO | 2019134563 | A1 | 11 July 2019 |
| CN | 111586742 | A | 25 August 2020 | None | | | |
| US | 2021058889 | A1 | 25 February 2021 | WO | 2021041020 | A1 | 04 March 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110365571

- CN 202110975593